(19) Europäisches Patentamt / European Patent Office / Office européen des brevets

(11) **EP 3 575 345 B1**

(12) **EUROPEAN PATENT SPECIFICATION**

(45) Date of publication and mention
of the grant of the patent:
**11.05.2022 Bulletin 2022/19**

(21) Application number: **18744754.5**

(22) Date of filing: **23.01.2018**

(51) International Patent Classification (IPC):
*C08J 3/215* (2006.01)    *C08J 3/24* (2006.01)
*C08L 13/00* (2006.01)    *C08L 33/00* (2006.01)
*C08L 33/08* (2006.01)    *C08F 220/18* (2006.01)

(52) Cooperative Patent Classification (CPC):
(C-Sets available)
**C08F 220/1802; C08J 3/215; C08J 3/24;
C08L 13/00; C08L 33/00; C08L 33/08**    (Cont.)

(86) International application number:
**PCT/JP2018/002029**

(87) International publication number:
**WO 2018/139466 (02.08.2018 Gazette 2018/31)**

(54) **METHOD FOR PRODUCING ACRYLIC RUBBER**

VERFAHREN ZUR HERSTELLUNG VON ACRYLKAUTSCHUK

PROCÉDÉ DE PRODUCTION DE CAOUTCHOUC ACRYLIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2017 JP 2017013289**

(43) Date of publication of application:
**04.12.2019 Bulletin 2019/49**

(73) Proprietor: **Zeon Corporation
Tokyo 100-8246 (JP)**

(72) Inventors:
• **SATO, Susumu
Tokyo 100-8246 (JP)**
• **MASUDA, Hirofumi
Tokyo 100-8246 (JP)**

(74) Representative: **Maiwald Patent- und
Rechtsanwaltsgesellschaft mbH
Elisenhof
Elisenstraße 3
80335 München (DE)**

(56) References cited:
EP-A1- 0 443 864    EP-A1- 1 533 326
WO-A1-2014/126215    WO-A1-2016/136697
JP-A- 2004 256 801    JP-A- 2005 105 154
JP-A- 2005 112 918    US-A1- 2012 302 674
US-A1- 2015 376 395

• **TATEMICHI, HIDEMARO: "Recent Improvements
of Acrylic Rubbers", The Society of Polymer
Science , Japan, vol. 9, no. 9, 1960, pages 774-777,
XP009515047,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/1802, C08F 220/1804, C08F 222/14**

**Description**

TECHNICAL FIELD

The present invention relates to a method for producing an acrylic rubber, and more specifically relates to a method for producing an acrylic rubber which can appropriately reduce fouling of a polymerization apparatus during polymerization, and can produce an acrylic rubber which can provide a cross-linked rubber having high tensile strength and high heat resistance.

BACKGROUND ART

Acrylic rubber, which is a group of polymers comprising an acrylic acid ester as a main ingredient, is generally known as a type of rubber having high heat resistance, oil resistance, and ozone resistance, and is widely used in automobile-related fields.

Such an acrylic rubber is usually produced as follows: A mixture of monomers for forming the acrylic rubber is emulsion polymerized. A coagulant is then added to the resulting polymer emulsion to cause coagulation, and hydrous crumbs produced by the coagulation are dried (for example, see Patent Document 1).

On the other hand, there have been requirements for properties of members for automobiles, such as sealing materials, hose materials, vibration insulators, tube materials, belt materials, and boot materials, with increasing severity. In particular, an acrylic rubber which has high heat resistance and high tensile strength is demanded. Unfortunately, conventional acrylic rubbers, such as the acrylic rubber described in Patent Document 1, have a certain but not always sufficient level of tensile strength, and thus cannot meet such recent requirements for tensile strength in some cases.

PRIOR ART DOCUMENT

PATENT DOCUMENTS

Patent Document 1: Patent Document 1: JP-A H07-145291

SUMMARY OF THE INVENTION

PROBLEMS TO BE SOLVED BY INVENTION

The present invention has been made in consideration of such circumstances. An object of the present invention is to provide a method for producing an acrylic rubber which can appropriately reduce fouling of a polymerization apparatus during polymerization, and can produce a cross-linked rubber having high tensile strength and high heat resistance.

MEANS FOR SOLVING THE PROBLEMS

As a result of extensive research to achieve the object above, the present inventors have found that the object above can be achieved by adding an antioxidant in the form of a solution or a dispersion to an uncoagulated polymer emulsion prepared through emulsion polymerization of monomers for forming an acrylic rubber, and then coagulating the polymer emulsion, and thus have completed the present invention.

In other words, the present invention provides a method for producing an acrylic rubber, comprising: an emulsion polymerization step of preparing a polymer emulsion by emulsion polymerizing monomers for forming an acrylic rubber; an antioxidant addition step of adding an antioxidant in the form of a solution or a dispersion to the polymer emulsion; and a coagulation step of adding a coagulant to the polymer emulsion containing the antioxidant to yield hydrous crumbs.

Preferably, the content of the antioxidant in the acrylic rubber is 500 wt ppm or more.

Preferably, the content of the antioxidant in the acrylic rubber is 12,000 wt ppm or less.

In the production method according to the present invention, the amount of the antioxidant to be added in the antioxidant addition step is preferably 0.1 to 2 parts by weight relative to 100 parts by weight of the acrylic rubber component contained in the polymer emulsion.

In the production method according to the present invention, the amount of the antioxidant to be added in the antioxidant addition step is preferably 0.2 to 1.2 parts by weight relative to 100 parts by weight of the acrylic rubber component contained in the polymer emulsion.

In the production method according to the present invention, the antioxidant is preferably at least one selected from the group consisting of sulfur atom-free phenol antioxidants, thiophenol antioxidants, amine antioxidants, and imidazole antioxidants.

In the production method according to the present invention, the antioxidant is preferably at least one selected from stearyl 3-(3,5-di-tert-butyl-4-hydroxyphenyl)propionate, 2,4-bis[(octylthio)methyl]-6-methylphenol, 4,4'-bis($\alpha,\alpha$-dimethylbenzyl)diphenylamine, 2-mercaptobenzimidazole, and mono- (di-, or tri-)($\alpha$-methylbenzyl)phenol.

In the production method according to the present invention, the antioxidant is preferably stearyl 3-(3,5-di-tert-butyl-4-hydroxyphenyl)propionate.

In the production method according to the present invention, the antioxidant is preferably added in the form of an aqueous solution or an aqueous dispersion.

In the production method according to the present invention, when the antioxidant is added in the form of a solution or a dispersion, the proportion of the antioxidant contained in the solution or the dispersion is preferably 10 to 90 wt%.

In the production method according to the present invention, when the antioxidant is added in the form of a solution or a dispersion, the proportion of the antioxidant contained in the solution or the dispersion is preferably 20 to 60 wt%.

The production method according to the present invention preferably further comprises a drying step of drying the hydrous crumbs at a temperature of 150°C or more in a screw extruder dryer or a hot air dryer.

In the production method according to the present invention, the monomers are preferably emulsion polymerized in the presence of a nonionic emulsifier and an anionic emulsifier.

In the production method according to the present invention, the amount of the nonionic emulsifier to the anionic emulsifier to be used is preferably 50/50 to 75/25 in a weight ratio of "nonionic emulsifier/anionic emulsifier".

In the production method according to the present invention, the emulsion polymerization reaction is preferably performed in the emulsion polymerization step while the monomers for forming an acrylic rubber, a polymerization initiator, and a reducing agent are being continuously added dropwise to a polymerization reaction system from the start of the polymerization reaction to any point of time.

In the production method according to the present invention, the emulsion polymerization reaction is preferably performed while a monomer emulsion containing the monomers for forming an acrylic rubber mixed with an emulsifier and water is being continuously added dropwise to the polymerization reaction system from the start of the polymerization reaction to any point of time.

The present invention also provides a method for producing an acrylic rubber composition, comprising the step of compounding a cross-linking agent with an acrylic rubber prepared by the production method above.

Furthermore, the present invention provides a method for producing a cross-linked rubber, comprising the step of cross-linking an acrylic rubber composition prepared by the production method above.

EFFECTS OF THE INVENTION

The present invention provides a method for producing an acrylic rubber which can appropriately reduce fouling of a polymerization apparatus during polymerization, and can produce an acrylic rubber which can provide a cross-linked rubber having high tensile strength and high heat resistance.

DESCRIPTION OF EMBODIMENTS

<Acrylic rubber>

First, the acrylic rubber produced by the production method according to the present invention will be described.

The acrylic rubber produced by the production method according to the present invention refers to a rubbery polymer comprising a (meth)acrylic acid ester monomer unit as a main ingredient (which refers to an ingredient occupying 50 wt% or more of the total monomer units in the rubber in the present invention) in the molecule (where the term (meth)acrylic acid ester monomer means an acrylic acid ester monomer and/or a methacrylic acid ester monomer. Hereinafter, the same holds for methyl (meth)acrylate and others).

Examples of the (meth)acrylic acid ester monomer forming the (meth)acrylic acid ester monomer unit as the main ingredient of the acrylic rubber produced by the production method according to the present invention include, but should not be limited to, alkyl (meth)acrylate monomers, alkoxyalkyl (meth)acrylate monomers, and the like.

Any alkyl (meth)acrylate monomer can be used without limitation, and (meth)acrylic acid esters of $C_1$ to $C_8$ alkanols are preferred. Specifically, examples thereof include methyl (meth)acrylate, ethyl (meth)acrylate, n-propyl (meth)acrylate, isopropyl (meth)acrylate, n-butyl (meth)acrylate, isobutyl (meth)acrylate, n-hexyl (meth)acrylate, 2-ethylhexyl (meth)acrylate, cyclohexyl (meth)acrylate, and the like. Among these monomers, ethyl (meth)acrylate and n-butyl (meth)acrylate are preferred, and ethyl acrylate and n-butyl acrylate are particularly preferred. These monomers can be used alone or in combination.

Any alkoxyalkyl (meth)acrylate monomer can be used without limitation, and (meth)acrylic acid esters of $C_2$ to

4

$C_8$ alkoxyalkyl alcohols are preferred. Specifically, examples thereof include methoxymethyl (meth)acrylate, ethoxymethyl (meth)acrylate, 2-methoxyethyl (meth)acrylate, 2-ethoxyethyl (meth)acrylate, 2-propoxyethyl (meth)acrylate, 2-butoxyethyl (meth)acrylate, 3-methoxypropyl (meth)acrylate, 4-methoxybutyl (meth)acrylate, and the like. Among these monomers, 2-ethoxyethyl (meth)acrylate and 2-methoxyethyl (meth)acrylate are preferred, and 2-ethoxyethyl acrylate and 2-methoxyethyl acrylate are particularly preferred. These monomers can be used alone or in combination.

The content of the (meth)acrylic acid ester monomer unit in the acrylic rubber produced by the production method according to the present invention is usually 50 to 99.9 wt%, preferably 60 to 99.5 wt%, more preferably 70 to 99.5 wt%. An excessively small content of the (meth)acrylic acid ester monomer unit may result in a cross-linked rubber having reduced weatherability, heat resistance, and oil resistance. In contrast, an excessively large content thereof may result in a cross-linked rubber having reduced heat resistance.

The acrylic rubber produced by the production method according to the present invention preferably comprises 30 to 100 wt% of the alkyl (meth)acrylate monomer unit and 70 to 0 wt% of the alkoxyalkyl (meth)acrylate monomer unit as the (meth)acrylic acid ester monomer unit.

Besides the alkoxyalkyl (meth)acrylate monomer unit, the acrylic rubber produced by the production method according to the present invention may contain a cross-linkable monomer unit as needed. Any cross-linkable monomer for forming a cross-linkable monomer unit can be used without limitation. Examples thereof include $\alpha,\beta$-ethylenically unsaturated carboxylic acid monomers; monomers having an epoxy group; monomers having halogen atom; diene monomers; and the like.

Any $\alpha,\beta$-ethylenically unsaturated carboxylic acid monomer for forming an $\alpha,\beta$-ethylenically unsaturated carboxylic acid monomer unit can be used without limitation. Examples thereof include $C_3$ to $C_{12}$ $\alpha,\beta$-ethylenically unsaturated monocarboxylic acids, $C_4$ to $C_{12}$ $\alpha,\beta$-ethylenically unsaturated dicarboxylic acids, $C_4$ to $C_{12}$ $\alpha,\beta$-ethylenically unsaturated dicarboxylic acid monoesters of $C_1$ to $C_8$ alkanols, and the like. If such an $\alpha,\beta$-ethylenically unsaturated carboxylic acid monomer is used, the acrylic rubber can be obtained as a carboxyl group-containing acrylic rubber having a carboxyl group as a cross-linking point, which, in turn, results in a cross-linked rubber having further enhanced compression set resistance.

Specific examples of the $C_3$ to $C_{12}$ $\alpha,\beta$-ethylenically unsaturated monocarboxylic acids include acrylic acid, methacrylic acid, $\alpha$-ethylacrylic acid, crotonic acid, cinnamic acid, and the like.

Specific examples of the $C_4$ to $C_{12}$ $\alpha,\beta$-ethylenically unsaturated dicarboxylic acids include butenedioic acids such as fumaric acid and maleic acid; itaconic acid; citraconic acid; chloromaleic acid; and the like.

Specific examples of the $C_4$ to $C_{12}$ $\alpha,\beta$-ethylenically unsaturated dicarboxylic acid monoesters of $C_1$ to $C_8$ alkanols include linear mono-alkyl esters of butenedioic acid such as monomethyl fumarate, monoethyl fumarate, mono-n-butyl fumarate, monomethyl maleate, monoethyl maleate, and mono-n-butyl maleate; butenedioic acid monoesters having an alicyclic structure such as monocyclopentyl fumarate, monocyclohexyl fumarate, monocyclohexenyl fumarate, monocyclopentyl maleate, monocyclohexyl maleate, and monocyclohexenyl maleate; itaconic acid monoesters such as monomethyl itaconate, monoethyl itaconate, mono-n-butyl itaconate, and monocyclohexyl itaconate; and the like.

Among these monoesters, preferred are $C_4$ to $C_{12}$ $\alpha,\beta$-ethylenically unsaturated dicarboxylic acid monoesters of $C_1$ to $C_8$ alkanols. More preferred are linear mono-alkyl esters of butenedioic acid or butenedioic acid monoesters having an alicyclic structure. Still more preferred are mono-n-butyl fumarate, mono-n-butyl maleate, monocyclohexyl fumarate, and monocyclohexyl maleate. Particularly preferred is mono-n-butyl fumarate. These $\alpha,\beta$-ethylenically unsaturated carboxylic acid monomers can be used alone or in combination. Among these monomers listed above, the dicarboxylic acids include those present as anhydrides thereof.

Any monomer having an epoxy group can be used without limitation. Examples thereof include epoxy group-containing (meth)acrylic acid esters such as glycidyl (meth)acrylate; epoxy group-containing ethers such as allyl glycidyl ether and vinyl glycidyl ether; and the like.

Any monomers having halogen atom can be used without limitation. Examples thereof include unsaturated alcohol esters of halogen-containing saturated carboxylic acids, haloalkyl (meth)acrylates, haloacyloxyalkyl (meth)acrylates, (haloacetylcarbamoyloxy)alkyl (meth)acrylates, halogen-containing unsaturated ethers, halogen-containing unsaturated ketones, halomethyl group-containing aromatic vinyl compounds, halogen-containing unsaturated amides, haloacetyl group-containing unsaturated monomers, and the like.

Specific examples of the unsaturated alcohol esters of halogen-containing saturated carboxylic acids include vinyl chloroacetate, vinyl 2-chloropropionate, allyl chloroacetate, and the like.

Specific examples of the haloalkyl (meth)acrylates include chloromethyl (meth)acrylate, 1-chloroethyl (meth)acrylate, 2-chloroethyl (meth)acrylate, 1,2-dichloroethyl (meth)acrylate, 2-chloropropyl (meth)acrylate, 3-chloropropyl (meth)acrylate, 2,3-dichloropropyl (meth)acrylate, and the like.

Specific examples of the haloacyloxyalkyl (meth)acrylates include 2-(chloroacetoxy)ethyl (meth)acrylate, 2-(chloroacetoxy)propyl (meth)acrylate, 3-(chloroacetoxy)propyl (meth)acrylate, 3-(hydroxychloroacetoxy)propyl (meth)acrylate, and the like.

Specific examples of the (haloacetylcarbamoyloxy)alkyl (meth)acrylates include 2-(chloroacetylcarbamoyloxy)ethyl (meth)acrylate, 3-(chloroacetylcarbamoyloxy)propyl (meth)acrylate, and the like.

Specific examples of the halogen-containing unsaturated ethers include chloromethylvinyl ether, 2-chloroethylvinyl ether, 3-chloropropylvinyl ether, 2-chloroethylallyl ether, 3-chloropropylallyl ether, and the like.

Specific examples of the halogen-containing unsaturated ketones include 2-chloroethylvinyl ketone, 3-chloropropylvinyl ketone, 2-chloroethylallyl ketone, and the like.

Specific examples of the halomethyl group-containing aromatic vinyl compounds include p-chloromethylstyrene, m-chloromethylstyrene, o-chloromethylstyrene, p-chloromethyl-$\alpha$-methylstyrene, and the like.

Specific examples of halogen-containing unsaturated amides include N-chloromethyl(meth)acrylamide, and the like.

Specific examples of the haloacetyl group-containing unsaturated monomers include 3-(hydroxychloroacetoxy)propyl allyl ether, p-vinylbenzyl chloroacetate, and the like.

Examples of the diene monomers include conjugated diene monomers and non-conjugated diene monomers.

Specific examples of the conjugated diene monomers include 1,3-butadiene, isoprene, piperylene, and the like.

Specific examples of the non-conjugated diene monomers include ethylidene norbornene, dicyclopentadiene, dicyclopentadienyl (meth)acrylate, 2-dicyclopentadienylethyl (meth)acrylate, and the like.

Among these cross-linkable monomers listed above, if an $\alpha,\beta$-ethylenically unsaturated carboxylic acid monomer is used, a carboxyl group-containing acrylic rubber is obtained as the acrylic rubber. If the acrylic rubber is a carboxyl group-containing acrylic rubber, such an acrylic rubber can have favorable oil resistance and heat resistance, and can have improved compression set resistance.

The content of the cross-linkable monomer unit in the acrylic rubber produced by the production method according to the present invention is preferably 0.1 to 10 wt%, more preferably 0.5 to 7 wt%, still more preferably 0.5 to 5 wt%. A content of the cross-linkable monomer unit controlled within such a range can result in a cross-linked rubber having favorable mechanical properties and heat resistance as well as appropriately enhanced compression set resistance.

Besides the (meth)acrylic acid ester monomer unit and the cross-linkable monomer unit used as needed, the acrylic rubber produced by the production method according to the present invention may also include a unit of an additional copolymerizable monomer. Examples of such an additional copolymerizable monomer include aromatic vinyl monomers, $\alpha,\beta$-ethylenically unsaturated nitrile monomers, acrylamide monomers, other olefin monomers, and the like.

Examples of the aromatic vinyl monomers include styrene, $\alpha$-methylstyrene, divinylbenzene, and the like.

Examples of the $\alpha,\beta$-ethylenically unsaturated nitrile monomers include acrylonitrile, methacrylonitrile, and the like.

Examples of the acrylamide monomers include acrylamide, methacrylamide, and the like.

Examples of the other olefin monomers include ethylene, propylene, vinyl chloride, vinylidene chloride, vinyl acetate, ethyl vinyl ether, butyl vinyl ether, and the like.

Among these additional copolymerizable monomers, preferred are styrene, acrylonitrile, methacrylonitrile, ethylene, and vinyl acetate. More preferred are acrylonitrile, methacrylonitrile, and ethylene.

These additional copolymerizable monomers can be used alone or in combination. The content of the unit of the additional copolymerizable monomer in the acrylic rubber according to the present invention is usually 49.9 wt% or less, preferably 39.5 wt% or less, more preferably 29.5 wt% or less.

<Method for producing acrylic rubber>

The method for producing an acrylic rubber according to the present invention will now be described.

The method for producing an acrylic rubber according to the present invention comprises:

an emulsion polymerization step of emulsion polymerizing monomers for forming an acrylic rubber to prepare a polymer emulsion;
an antioxidant addition step of adding an antioxidant in the form of a solution or a dispersion to the polymer emulsion; and
a coagulation step of adding a coagulant to the polymer emulsion containing the antioxidant to yield hydrous crumbs.

<Emulsion polymerization step>

The emulsion polymerization step in the production method according to the present invention is a step of emulsion polymerizing monomers for forming an acrylic rubber to prepare a polymer emulsion.

Emulsion polymerization in the emulsion polymerization step may be performed using a usual method. An emulsifier, a polymerization initiator, a polymerization terminator, and the like can be used according to the usual method.

Any emulsifier can be used without limitation. Examples thereof include nonionic emulsifiers, such as polyoxyethylene alkyl ethers such as polyoxyethylene dodecyl ether, polyoxyethylene alkylphenol ethers such as polyoxyethylene nonylphenyl ether, polyoxyethylene alkyl esters such as polyoxyethylene stearate, and polyethylene oxide-polypropylene oxide copolymers such as polyoxyethylene sorbitan alkyl esters and polyethylene oxide-polypropylene oxide glycol; anionic emulsifiers, such as salts of fatty acid such as myristic acid, palmitic acid, oleic acid, and linolenic acid, alkylbenzene sulfonates such as sodium dodecylbenzenesulfonate, higher alcohol sulfate salt such as sodium lauryl sulfate, higher phosphate salts such as sodium alkyl phosphates, and alkyl sulfosuccinates; cationic emulsifiers, such as alkyl trimethyl ammonium chlorides, dialkyl ammonium chlorides, and benzyl ammonium chloride; and the like. These emulsifiers can be used alone or in combination. Among these nonionic emulsifiers, preferred are polyoxyethylene-polypropylene glycol, polyethylene glycol monostearate, polyoxyethylene alkyl ethers, and polyoxyethylene alkylphenol ethers. The nonionic emulsifier preferably has a weight average molecular weight of less than 10000, more preferably 500 to 8000, still more preferably 600 to 5000. Among these anionic emulsifiers, preferred are higher phosphate salts and higher alcohol sulfate salts.

Among these emulsifiers, at least one selected from a nonionic emulsifier and an anionic emulsifier is preferably used. More preferably, at least an anionic emulsifier is contained, and still more preferably, a combination of a nonionic emulsifier and an anionic emulsifier is used. Use of a combination of a nonionic emulsifier with an anionic emulsifier can effectively reduce fouling caused by adhesion of polymer aggregates to a polymerization apparatus (such as a polymerization tank) during emulsion polymerization, and can reduce the amount of the coagulant to be used in the coagulation step described later. As a result, the amount of the coagulant contained in the acrylic rubber finally yielded can be reduced, which results in a cross-linked rubber to be obtained having improved water resistance.

Use of a combination of a nonionic emulsifier with an anionic emulsifier can also enhance emulsification, and thus can reduce the amount of the emulsifier itself to be used. As a result, the amount of residual emulsifier contained in the acrylic rubber finally yielded can be reduced, thereby further enhancing the water resistance of the resulting acrylic rubber.

The total amount of the emulsifier to be used in the production method according to the present invention is preferably 0.1 to 5 parts by weight, more preferably 0.5 to 4 parts by weight, still more preferably 1 to 3 parts by weight relative to 100 parts by weight of the monomers to be used in polymerization. If the nonionic emulsifier is used in combination with the anionic emulsifier, the amount of the nonionic emulsifier to be used is more than 0 parts by weight and 4 parts by weight or less, preferably 0.1 to 3 parts by weight, more preferably 0.5 to 2 parts by weight, still more preferably 0.7 to 1.7 parts by weight relative to 100 parts by weight of the monomers to be used in polymerization, and the amount of the anionic emulsifier to be used is more than 0 parts by weight and 4 parts by weight or less, preferably 0.1 to 3 parts by weight, more preferably 0.5 to 2 parts by weight, still more preferably 0.35 to 0.75 parts by weight relative to 100 parts by weight of the monomers to be used in polymerization. If the nonionic emulsifier is used in combination with the anionic emulsifier, the amount of the nonionic emulsifier to the anionic emulsifier is preferably 1/99 to 99/1, more preferably 10/90 to 80/20, still more preferably 25/75 to 75/25, furthermore preferably 50/50 to 75/25, particularly preferably 65/35 to 75/25 in a weight ratio of "nonionic emulsifier/anionic emulsifier".

As a polymerization initiator, azo compounds such as azobisisobutyronitrile; organic peroxides such as diisopropylbenzene hydroperoxide, cumene hydroperoxide, paramenthane hydroperoxide, and benzoyl peroxide; inorganic peroxides such as sodium persulfate, potassium persulfate, hydrogen peroxide, and ammonium persulfate; and the like can be used. These polymerization initiators can be used alone or in combination. The amount of the polymerization initiator to be used is preferably 0.001 to 1.0 part by weight relative to 100 parts by weight of the monomers used in polymerization.

The organic peroxides and the inorganic peroxides as the polymerization initiator are preferably used as a redox polymerization initiator in combination with a reducing agent. Any reducing agent can be used in combination. Examples thereof include compounds containing reduced metal ions, such as ferrous sulfate, hexamethylenediaminetetraacetic acid ferric sodium salt, and cuprous naphthenate; ascorbic acid (salts) such as ascorbic acid, sodium ascorbate, and potassium ascorbate; erythorbic acid (salts) such as erythorbic acid, sodium erythorbate, and potassium erythorbate; saccharides; sulfinic acid salts such as sodium hydroxymethanesulfinate; sulfurous acid salts such as sodium sulfite, potassium sulfite, sodium hydrogen sulfite, aldehyde sodium hydrogen sulfite, and potassium hydrogen sulfite; pyrosulfurous acid salts such as sodium pyrosulfite, potassium pyrosulfite, sodium hydrogen pyrosulfite, and potassium hydrogen pyrosulfite; thiosulfuric acid salts such as sodium thiosulfate and potassium thiosulfate; phosphorus acid (salts) such as phosphorus acid, sodium phosphite, potassium phosphite, sodium hydrogen phosphite, and potassium hydrogen phosphite; pyrophosphorus acid (salts) such as pyrophosphorus acid, sodium pyrophosphite, potassium pyrophosphite, sodium hydrogen pyrophosphite, and potassium hydrogen pyrophosphite; and sodium formaldehyde sulfoxylate; and the like. These reducing agents can be used alone or in combination. The amount of the reducing agent to be used is preferably 0.0003 to 0.5 parts by weight relative to 100 parts by weight of the monomers used in polymerization.

Examples of the polymerization terminator include hydroxylamine, hydroxylamine sulfate, diethylhydroxylamine, hydroxylamine sulfonate and alkali metal salts thereof, sodium dimethyldithiocarbamate, hydroquinone, and the like.

The polymerization terminator can be used in any amount. The amount thereof is preferably 0.1 to 2 parts by weight relative to 100 parts by weight of the monomers used in polymerization.

The amount of water to be used is preferably 80 to 500 parts by weight, more preferably 100 to 300 parts by weight relative to 100 parts by weight of the monomers used in polymerization.

In emulsion polymerization, polymerization additives such as a molecular weight adjuster, a particle size adjuster, a chelating agent, and an oxygen trapping agent can be used as needed.

Although emulsion polymerization may be performed by any of a batchwise method, a semi-batchwise method, and a continuous method, a semi-batchwise method is preferred. Specifically, it is preferred that the polymerization reaction be performed while at least one selected from the monomers used in polymerization, the polymerization initiator, and the reducing agent is being continuously added dropwise to the polymerization reaction system from the start of the polymerization reaction to any point of time. For example, the polymerization reaction is performed while the monomers used in polymerization are being continuously added dropwise to a polymerization reaction system containing the polymerization initiator and the reducing agent from the start of the polymerization reaction to any point of time. It is more preferred that the polymerization reaction be performed while all the monomers used in polymerization, the polymerization initiator, and the reducing agent are being continuously added dropwise to the polymerization reaction system from the start of the polymerization reaction to any point of time. By performing the polymerization reaction while these substances are being continuously added dropwise, the emulsion polymerization can be stably performed, improving the polymerization conversion ratio. The polymerization is performed in the temperature range of usually 0 to 70°C, preferably 5 to 50°C.

If the polymerization reaction is performed while the monomers used in polymerization are being continuously added dropwise, it is preferred that the monomers used in polymerization be mixed with the emulsifier and water to prepare a monomer emulsion, and the monomer emulsion be continuously added dropwise. The monomer emulsion can be prepared by any method. Examples thereof include a method of stirring the total amount of the monomers used in polymerization, the total amount of the emulsifiers, and water with a stirrer such as a homomixer and a disc turbine. The amount of water to be used in the monomer emulsion is preferably 10 to 70 parts by weight, more preferably 20 to 50 parts by weight relative to 100 parts by weight of the monomers used in polymerization.

If the polymerization reaction is performed while all the monomers used in polymerization, the polymerization initiator, and the reducing agent are being continuously added dropwise to the polymerization reaction system from the start of the polymerization reaction to any point of time, these substances may be separately added dropwise to the polymerization system using droppers, or at least the polymerization initiator and the reducing agent may be preliminarily mixed and prepared into an aqueous solution as needed, so that these agents may be added dropwise to the polymerization system from the same dropper. After the addition is completed, the reaction may be continued for any time to further improve the polymerization conversion ratio.

<Antioxidant addition step>

The antioxidant addition step in the production method according to the present invention is a step of adding an antioxidant in the form of a solution or a dispersion to the uncoagulated polymer emulsion prepared in the emulsion polymerization step.

In the production method according to the present invention, the antioxidant in the form of a solution or a dispersion is added to the polymer emulsion after the emulsion polymerization and before the coagulation. This procedure can appropriately reduce fouling caused by adhesion of polymer aggregates to a polymerization apparatus (such as a polymerization tank) during polymerization, and can provide an acrylic rubber which can give a cross-linked rubber having high tensile strength and high heat resistance. In particular, the antioxidant can be homogeneously dispersed in the polymer emulsion by adding the antioxidant in the form of a solution or a dispersion to the polymer emulsion after the emulsion polymerization and before the coagulation, and thus, can be homogeneously dispersed in the acrylic rubber (hydrous crumbs) whch is obtained by coagulation in the coagulation step described later. As a result, the effect of adding the antioxidant can be sufficiently demonstrated, and the degradation of the acrylic rubber caused by heating in the drying step after the coagulation can be effectively prevented, thus preventing a reduction in Mooney viscosity (polymer Mooney) attributed to the heating during the drying step.

In particular, according to the knowledge of the present inventors, antioxidant-free acrylic rubbers or acrylic rubbers containing an antioxidant insufficiently dispersed are thermally degraded by heating in a drying step after coagulation, leading to failures such as a reduction in Mooney viscosity, which, in turn, results in a cross-linked rubber having reduced tensile strength. According to the knowledge of the present inventors, if an antioxidant is added before emulsion polymerization, aggregates are generated in a polymer emulsion obtained by emulsion polymerization. The generated aggregates adhere to the polymerization apparatus to cause fouling thereof, leading to failures such as a reduction in productivity. In contrast, in the production method according to the present invention, the antioxidant in the form of a solution or a dispersion is added to the polymer emulsion after the emulsion polymerization and before the coagulation. This method can appropriately reduce fouling of the polymerization apparatus during polymerization, and can provide an acrylic rubber which can give a cross-linked rubber having high tensile strength and high heat resistance.

In addition, in the production method according to the present invention, the antioxidant can be homogeneously dispersed in the acrylic rubber (hydrous crumbs) which is obtained by coagulation in the coagulation step described later by adding the antioxidant in the form of a solution or a dispersion to the polymer emulsion after the emulsion polymerization and before the coagulation. Thus, the coagulant can be appropriately removed by a washing step with water after the coagulation. As a result, the content of ash, which is mainly derived from the coagulant, in the resulting acrylic rubber can be reduced, thus appropriately preventing a reduction in water resistance caused by ash.

Any antioxidant can be used without limitation. Examples thereof include styrenated phenols such as 2,6-di-t-butyl-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl)propionate, mono- (di- or tri-)(a-methylbenzyl)phenol; sulfur atom-free phenol antioxidants such as 2,2'-methylene-bis(6-$\alpha$-methyl-benzyl-p-cresol), 4,4'-methylene-bis(2,6-di-t-butylphenol), 2,2'-methylene-bis(4-methyl-6-t-butylphenol), stearyl 3-(3,5-di-tert-butyl-4-hydroxyphenyl)propionate, alkylated bisphenol, and butylated reaction products of p-cresol and dicyclopentadiene; thiophenol antioxidants such as 2,4-bis[(octylthio)methyl]-6-methylphenol, 2,2'-thiobis-(4-methyl-6-t-butylphenol), 4,4'-thiobis-(6-t-butyl-o-cresol), and 2,6-di-t-butyl-4-(4,6-bis(octylthio)-1,3,5-triazin-2-ylamino) phenol; phosphorous acid ester antioxidants such as tris(nonylphenyl) phosphite, diphenylisodecyl phosphite, and tetraphenyldipropylene glycol-diphosphite; sulfur-containing ester antioxidants such as dilauryl thiodipropionate; amine antioxidants such as phenyl-$\alpha$-naphthylamine, phenyl-$\beta$-naphthylamine, p-(p-toluenesulfonylamide)-diphenylamine, 4,4'-bis($\alpha,\alpha$-dimethylbenzyl)diphenylamine, N,N-diphenyl-p-phenylenediamine, N-isopropyl-N'-phenyl-p-phenylenediamine, and butylaldehyde-aniline condensates; imidazole antioxidants such as 2-mercaptobenzimidazole; quinoline antioxidants such as 6-ethoxy-2,2,4-trimethyl-1,2-dihydroquinoline; hydroquinone antioxidants such as 2,5-di-(t-amyl)hydroquinone; and the like. These antioxidants may be used alone or in combination. Among these antioxidants, preferred are sulfur atom-free phenol antioxidants, thiophenol antioxidants, amine antioxidants, and imidazole antioxidants. More preferred are stearyl 3-(3,5-di-tert-butyl-4-hydroxyphenyl)propionate, 2,4-bis[(octylthio)methyl]-6-methylphenol, 4,4'-bis($\alpha,\alpha$-dimethylbenzyl)diphenylamine, 2-mercaptobenzimidazole, and mono-(di- or tri-)($\alpha$-methylbenzyl)phenol. Particularly preferred is stearyl 3-(3,5-di-tert-butyl-4-hydroxyphenyl)propionate.

Any solvent can be used to prepare the solution or dispersion of the antioxidant to be added. Examples thereof include water; alcohols, such as methanol, ethanol, and isopropyl alcohol; chain aliphatic hydrocarbons, such as butane, pentane, hexane, and heptane; alicyclic hydrocarbons, such as cyclopentane and cyclohexane; aromatic hydrocarbons, such as benzene, toluene, and xylene; and the like.

When the antioxidant is added in the form of a solution or a dispersion, the proportion of the antioxidant in the solution or dispersion is preferably 10 to 90 wt%, more preferably 15 to 70 wt%, still more preferably 20 to 60 wt%, particularly preferably 35 to 60 wt%. A proportion of the antioxidant in the solution or dispersion within this range can further enhance the dispersibility of the antioxidant in the resulting acrylic rubber, which results in a cross-linked rubber to be obtained having further enhanced tensile strength.

The amount of the antioxidant to be added in the antioxidant addition step is preferably 0.1 to 2 parts by weight, more preferably 0.2 to 1.2 parts by weight relative to 100 parts by weight of the acrylic rubber component in the polymer emulsion. In the production method according to the present invention, the antioxidant in the form of a solution or a dispersion is added to the polymer emulsion after the emulsion polymerization and before the coagulation. Because this method enables the antioxidant to be homogeneously dispersed, the effect of adding the antioxidant can be sufficiently demonstrated even with a relatively small amount thereof to be added. Although the antioxidant is added to the polymer emulsion after the emulsion polymerization and before the coagulation, the added antioxidant is not substantially removed in the subsequent steps such as coagulation, washing, and drying. Accordingly, the antioxidant added to the polymer emulsion can sufficiently demonstrate its effect by addition.

In the production method according to the present invention, it is preferred that among the compounding agents compounded to the acrylic rubber, some compounding agents, specifically, a lubricant and/or an ethylene oxide polymer be also preliminarily added to the polymer emulsion before the coagulation in addition to the antioxidant in the form of a solution or a dispersion.

For example, by preliminarily adding the lubricant to the polymer emulsion before the coagulation, the resulting acrylic rubber can contain the lubricant well dispersed. As a result, the resulting acrylic rubber can have an appropriately reduced tackiness, thereby preventing adhesion of the acrylic rubber to a dryer during drying and improving the operability during the drying. In addition, the resulting acrylic rubber can have high roll processability. The amount of the lubricant to be added is preferably 0.1 to 0.4 parts by weight, more preferably 0.15 to 0.3 parts by weight, still more preferably 0.2 to 0.3 parts by weight relative to 100 parts by weight of the acrylic rubber component in the polymer emulsion. Even if the lubricant is added to the polymer emulsion before the coagulation, the lubricant preliminarily compounded is not substantially removed in the subsequent steps, such as coagulation, washing, and drying. Accordingly, the lubricant added to the polymer emulsion can also sufficiently demonstrate its effect by addition.

Examples of the lubricant include, but should not be limited to, phosphoric acid esters, fatty acid esters, fatty acid amides, higher fatty acids, and the like. Examples of the method of preparing the polymer emulsion containing the lubricant include a method of adding the lubricant to the polymer emulsion after the emulsion polymerization and before the coagulation, and a method of adding the lubricant to the emulsion before the emulsion polymerization.

The polymer emulsion can have improved coagulation properties by preliminarily adding the ethylene oxide polymer to the polymer emulsion before the coagulation, thereby reducing the amount of the coagulant used in the coagulation step. As a result, the amount of residual coagulant in the acrylic rubber finally yielded can be reduced, resulting in a cross-linked rubber to be obtained having further enhanced compression set resistance and water resistance. The ethylene oxide polymer can be any polymer having a polyethylene oxide structure as the main chain structure. Examples thereof include polyethylene oxide, polypropylene oxide, ethylene oxide-propylene oxide copolymers, and the like. Among these polymers, suitable is polyethylene oxide. The amount of the ethylene oxide polymer to be compounded is preferably 0.01 to 1 part by weight, more preferably 0.01 to 0.6 parts by weight, still more preferably 0.02 to 0.5 parts by weight relative to 100 parts by weight of the acrylic rubber component in the polymer emulsion. The ethylene oxide polymer has a weight average molecular weight of preferably 10000 to 1000000, more preferably 10000 to 200000, still more preferably 20000 to 120000. Examples of the method of preparing the polymer emulsion containing the ethylene oxide polymer include a method of adding the ethylene oxide polymer to the polymer emulsion after the emulsion polymerization and before the coagulation, and a method of adding the ethylene oxide polymer to the emulsion before the emulsion polymerization.

When the lubricant and/or the ethylene oxide polymer, in addition to the antioxidant in the form of a solution or a dispersion, are added to the polymer emulsion after the emulsion polymerization and before the coagulation, the addition order thereof is not particularly limited. The order may be appropriately selected.

<Coagulation step>

The coagulation step in the production method according to the present invention is a step of adding a coagulant to the polymer emulsion prepared in the emulsion polymerization step to yield hydrous crumbs.

Any coagulant can be used without limitation. Examples thereof include mono- to trivalent metal salts. The mono- to trivalent metal salts are any salts containing metals which turn into mono- to trivalent metal ions when the salts are dissolved in water. Examples thereof include, but should not be limited to, salts of inorganic acids selected from hydrochloric acid, nitric acid and sulfuric acid with a metal selected from sodium, potassium, lithium, magnesium, calcium, zinc, titanium, manganese, iron, cobalt, nickel, aluminum, and tin or salts of organic acids such as acetic acid with a metal selected from sodium, potassium, lithium, magnesium, calcium, zinc, titanium, manganese, iron, cobalt, nickel, aluminum, and tin. Hydroxides of these metals can also be used.

Specific examples of the mono- to trivalent metal salts include metal chlorides such as sodium chloride, potassium chloride, lithium chloride, magnesium chloride, calcium chloride, zinc chloride, titanium chloride, manganese chloride, iron chloride, cobalt chloride, nickel chloride, aluminum chloride, and tin chloride; nitric acid salts such as sodium nitrate, potassium nitrate, lithium nitrate, magnesium nitrate, calcium nitrate, zinc nitrate, titanium nitrate, manganese nitrate, iron nitrate, cobalt nitrate, nickel nitrate, aluminum nitrate, and tin nitrate; sulfuric acid salts such as sodium sulfate, potassium sulfate, lithium sulfate, magnesium sulfate, calcium sulfate, zinc sulfate, titanium sulfate, manganese sulfate, iron sulfate, cobalt sulfate, nickel sulfate, aluminum sulfate, and tin sulfate; and the like. Among these metal salts, preferred are calcium chloride, sodium chloride, aluminum sulfate, magnesium chloride, magnesium sulfate, zinc chloride, zinc sulfate, and sodium sulfate. Among these, preferred are mono- or divalent metal salts, and more preferred are calcium chloride, sodium chloride, magnesium sulfate, and sodium sulfate. Still more preferred is magnesium sulfate or sodium sulfate. These metal salts can be used alone or in combination.

The amount of the coagulant to be used is preferably 1 to 100 parts by weight, more preferably 2 to 40 parts by weight, still more preferably 3 to 20 parts by weight, particularly preferably 3 to 12 parts by weight relative to 100 parts by weight of the acrylic rubber component in the polymer emulsion to sufficiently solidify the acrylic rubber and reduce the amount of residual coagulant in the resulting acrylic rubber finally yielded, and thereby to yield a cross-linked rubber having improved compression set resistance and water resistance. An excessively small amount of the coagulant results in insufficient coagulation to reduce the yield of the acrylic rubber. In contrast, an excessively large amount thereof excessively increases the amount of residual coagulant in the acrylic rubber finally yielded to reduce the water resistance.

Although the coagulation temperature can be any temperature, it is preferably 50 to 90°C, more preferably 60 to 90°C, still more preferably 78 to 90°C.

<Washing step>

The production method according to the present invention preferably further comprises a washing step of washing the hydrous crumbs yielded in the coagulation step.

Any washing method can be used without limitation. Examples thereof include a method of washing hydrous crumbs with water by using water as a washing liquid, and mixing the hydrous crumbs with added water. The operation to wash hydrous crumbs with water can be performed at any temperature without limitation. The temperature is preferably 5 to 60°C, more preferably 10 to 50°C, and the mixing time is 1 to 60 minutes, more preferably 2 to 30 minutes.

Any amount of water can be added to the hydrous crumbs during washing of the hydrous crumbs with water. The amount of water per one washing operation with water is preferably 50 to 9800 parts by weight, more preferably 300 to 1800 parts by weight relative to 100 parts by weight of the solids content (mainly the acrylic rubber component) of the hydrous crumbs because the amount of residual coagulant in the acrylic rubber finally yielded can be effectively reduced.

Although the operation may be performed one time, the number of the operations is preferably 2 to 10 times, more preferably 3 to 8 times to reduce the amount of residual coagulant in the acrylic rubber finally yielded. Although a large number of times of washing with water is desirable to reduce the amount of residual coagulant in the acrylic rubber finally yielded, the number of times thereof is preferably within the range described above. Even if washing is performed beyond this range, the coagulant removal effect is small, and the number of steps is increased to significantly reduce the productivity.

In the present invention, after washing with water, acid washing may be further performed using an acid as a washing liquid. Acid washing can result in a cross-linked rubber having further enhanced compression set resistance. If the acrylic rubber is a carboxyl group-containing acrylic rubber having a carboxyl group, the compression set resistance improving effect of acid washing is particularly significant. Any acid, such as sulfuric acid, hydrochloric acid, and phosphoric acid, can be used without limitation. If an acid is added to the hydrous crumbs during acid washing, the acid is preferably added in the form of an aqueous solution, preferably in the form of an aqueous solution having a pH of 6 or less, more preferably a pH of 4 or less, still more preferably a pH of 3 or less. Acid washing can be performed by any method without limitation. Examples thereof include a method of combining and mixing hydrous crumbs with an aqueous solution of an acid.

Acid washing can be performed at any temperature. The temperature is preferably 5 to 60°C, more preferably 10 to 50°C, and the mixing time is 1 to 60 minutes, more preferably 2 to 30 minutes. The washing liquid for acid washing can have any pH. The pH is preferably a pH of 6 or less, more preferably a pH of 4 or less, still more preferably a pH of 3 or less. The pH of the washing liquid for acid washing can be determined by measuring the pH of water contained in the hydrous crumbs after acid washing, for example.

After acid washing is performed, it is preferred that washing with water be further performed. The same conditions as those in washing with water can be used.

<Drying step>

The production method described above may further comprise a drying step of drying the hydrous crumbs washed in the washing step above.

The drying step may be performed by any drying method. Drying may be performed using a dryer, such as a single or twin screw extruder dryer, a kneader dryer, an expander dryer, a hot air dryer, and a reduced pressure dryer. A drying method using a combination thereof may also be used. Furthermore, before drying of hydrous crumbs in the drying step, the hydrous crumbs may be separated, as needed, using a sieve such as a rotary screen and a vibration screen; a centrifugal dehydrator; and the like. Among these, drying is preferably performed with a screw extruder dryer or a hot air dryer. The drying temperature is preferably 150°C or more, more preferably 160°C or more. Although not particularly limited, the upper limit of the drying temperature is 180°C or less. According to the production method according to the present invention, the antioxidant in the form of a solution or a dispersion is added to the polymer emulsion after the emulsion polymerization and before the coagulation. For this reason, the antioxidant can be homogeneously dispersed in the hydrous crumbs (acrylic rubber), thereby sufficiently demonstrating the effect of adding the antioxidant. For this reason, even if drying is performed at a relatively high temperature as above, degradation of the acrylic rubber caused by the drying can be appropriately prevented, and the drying time can be shortened, resulting in improved productivity.

According to the production method according to the present invention as above, the acrylic rubber can be produced as described above.

The acrylic rubber thus produced has a Mooney viscosity (ML1+4, 100°C) of preferably 10 to 80, more preferably 20 to 70, still more preferably 25 to 60.

In the acrylic rubber produced by the production method according to the present invention, the content of the antioxidant in the acrylic rubber is preferably 500 wt ppm or more, more preferably 1,000 wt ppm or more, still more preferably 2,000 wt ppm or more. Although not particularly limited, the upper limit of the content of the antioxidant is usually 5,000 wt ppm or less. A content of the antioxidant within this range can more appropriately prevent degradation of the acrylic rubber caused by heating, which results in a cross-linked rubber to be obtained having further enhanced tensile strength. The content of the antioxidant can be determined, for example, from the area of a peak at the molecular weight corresponding to the antioxidant in a chromatogram obtained by GPC measurement of the acrylic rubber.

In the acrylic rubber produced by the production method according to the present invention, the amount of residual coagulant contained in the acrylic rubber is preferably 10,000 wt ppm or less, more preferably 7,000 wt ppm or less, still more preferably 5,000 wt ppm or less, particularly preferably 3,500 wt ppm or less. Although not particularly limited, the lower limit of the amount of residual coagulant is preferably 10 wt ppm or more. An amount of residual coagulant in the acrylic rubber within this range can provide a cross-linked rubber having high compression set resistance and water resistance. The acrylic rubber produced by the production method according to the present invention preferably contains a smaller amount of residual coagulant. For this reason, the amount of residual coagulant in the acrylic rubber might be reduced by a method of reducing the amount of coagulant used during the coagulation. This method, however, results in insufficient coagulation, and thus a poor recovery ratio of the acrylic rubber, or leads to a necessity of increasing the number of times of washing with water. Accordingly, from the viewpoint of stable production, the amount of residual coagulant in the acrylic rubber is preferably 200 wt ppm or more, more preferably 500 wt ppm or more. The amount of residual coagulant can be determined by performing element analysis of the acrylic rubber, and measuring the contents of elements contained in the coagulant. The amount of residual coagulant can be controlled by any method to fall within the range specified above. Examples thereof include a method of controlling the amount of coagulant to be added within the range specified above, and a method of adjusting the condition for washing with water as described above.

Furthermore, in the acrylic rubber produced by the production method according to the present invention, the amount of residual emulsifier contained in the acrylic rubber is preferably 22,000 wt ppm or less, more preferably 20,000 wt ppm or less, still more preferably 18,000 wt ppm or less, particularly preferably 17,000 wt ppm or less. Although not particularly limited, the lower limit of the amount of residual emulsifier is preferably 10 wt ppm or more, more preferably 200 wt ppm or more, still more preferably 500 wt ppm or more. An amount of residual emulsifier in the acrylic rubber within this range can result in a cross-linked rubber to be obtained having further enhanced water resistance. The amount of residual emulsifier can be determined, for example, from the area of a peak at the molecular weight corresponding to the emulsifier in a chromatogram obtained by GPC measurement of the acrylic rubber. The amount of residual emulsifier can be controlled by any method to fall within the range specified above. Examples thereof include a method of using a combination of a nonionic emulsifier and an anionic emulsifier as the emulsifier as described above and controlling the amount thereof to be added within the range specified above, and the like.

As described above, the acrylic rubber produced by the production method according to the present invention preferably contains the coagulant. The content of the acrylic rubber component in the acrylic rubber produced by the production method according to the present invention is preferably 95 wt% or more, more preferably 97 wt% or more, still more preferably 98 wt% or more. In other words, the acrylic rubber produced by the production method according to the present invention can also be referred to as an acrylic rubber composition containing preferably 95 wt% or more (more preferably 97 wt% or more, still more preferably 98 wt% or more) of the acrylic rubber component.

<Acrylic rubber composition>

The acrylic rubber composition according to the present invention is prepared by compounding a cross-linking agent with the acrylic rubber yielded by the production method according to the present invention.

Any cross-linking agent can be used without limitation. Conventionally known cross-linking agents can be used, for example, polyvalent amine compounds such as diamine compounds and carbonates thereof; sulfur; sulfur donors; triazinethiol compounds; polyvalent epoxy compounds; organic ammonium carboxylate salts; organic peroxides; metal salts of dithiocarbamic acid; polyvalent carboxylic acids; quaternary onium salts; imidazole compounds; isocyanuric acid compounds; organic peroxides; and the like. These cross-linking agents can be used alone or in combination. It is preferred that the cross-linking agent be appropriately selected according to the type of cross-linkable monomer unit.

Among these cross-linking agents, preferred cross-linking agents to be used are polyvalent amine compounds and carbonates thereof if the acrylic rubber produced by the production method according to the present invention has an $\alpha,\beta$-ethylenically unsaturated carboxylic acid monomer unit as a cross-linkable monomer unit.

Any polyvalent amine compounds and carbonates thereof can be used without limitation. Preferred are $C_4$ to $C_{30}$ polyvalent amine compounds and carbonates thereof. Examples of such polyvalent amine compounds and carbonates thereof include aliphatic polyvalent amine compounds and carbonates thereof, aromatic polyvalent amine compounds, and the like.

Any aliphatic polyvalent amine compounds and carbonates thereof can be used without limitation. Examples thereof include hexamethylenediamine, hexamethylenediamine carbamate, N,N'-dicinnamylidene-1,6-hexanediamine, and the like. Among these compounds, preferred is hexamethylenediamine carbamate.

Any aromatic polyvalent amine compounds can be used without limitation. Examples thereof include 4,4'-methylenedianiline, p-phenylenediamine, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, and the like. Among these compounds, preferred is 2,2'-bis[4-(4-aminophenoxy)phenyl]propane.

The content of the cross-linking agent in the acrylic rubber composition according to the present invention is preferably 0.05 to 10 parts by weight, more preferably 0.1 to 5 parts by weight, particularly preferably 0.2 to 4 parts by weight relative to 100 parts by weight of the acrylic rubber. A content of the cross-linking agent within this range can provide a cross-linked rubber having sufficient rubber elasticity and high mechanical strength.

It is also preferred that the acrylic rubber composition according to the present invention further comprise a cross-linking accelerator. Any cross-linking accelerator can be used without limitation. If the acrylic rubber produced by the production method according to the present invention has a carboxyl group as a cross-linkable group and the cross-linking agent is a polyvalent amine compound or carbonate thereof, guanidine compounds, diazabicycloalkene compounds, imidazole compounds, quaternary onium salts, tertiary phosphine compounds, aliphatic monovalent secondary amine compounds, aliphatic monovalent tertiary amine compounds, and the like can be used, for example. Among these compounds, preferred are guanidine compounds, diazabicycloalkene compounds, and aliphatic monovalent secondary amine compounds, and particularly preferred are guanidine compounds. These basic cross-linking accelerators can be used alone or in combination.

Specific examples of the guanidine compounds include 1,3-di-o-tolylguanidine, 1,3-diphenylguanidine, and the like. Specific examples of the diazabicycloalkene compounds include 1,8-diazabicyclo[5.4.0]undec-7-ene, 1,5-diazabicyclo[4.3.0]non-5-ene, and the like. Specific examples of the imidazole compounds include 2-methylimidazole, 2-phenylimidazole, and the like. Specific examples of quaternary onium salts include tetra-n-butylammonium bromide, octadecyl-tri-n-butylammonium bromide, and the like. Specific examples of the tertiary phosphine compounds include triphenylphosphine, tri-p-tolylphosphine, and the like.

The aliphatic monovalent secondary amine compounds are compounds where two hydrogen atoms of ammonia are substituted with an aliphatic hydrocarbon group. The aliphatic hydrocarbon groups which substitute the hydrogen atoms are preferably $C_1$ to $C_{30}$ groups. Specific examples of the aliphatic monovalent secondary amine compounds include dimethylamine, diethylamine, dipropylamine, diallylamine, diisopropylamine, di-n-butylamine, di-t-butylamine, di-sec-butylamine, dihexylamine, diheptylamine, dioctylamine, dinonylamine, didecylamine, diundecylamine, didodecylamine, ditridecylamine, ditetradecylamine, dipentadecylamine, dicetylamine, di-2-ethylhexylamine, dioctadecylamine, and the like.

The aliphatic monovalent tertiary amine compounds are compounds where all the three hydrogen atoms of ammonia are substituted with an aliphatic hydrocarbon group. The aliphatic hydrocarbon groups which substitute the hydrogen atoms are preferably $C_1$ to $C_{30}$ groups. Specific examples of the aliphatic monovalent tertiary amine compounds include trimethylamine, triethylamine, tripropylamine, triallylamine, triisopropylamine, tri-n-butylamine, tri-t-butylamine, tri-sec-butylamine, trihexylamine, triheptylamine, trioctylamine, trinonylamine, tridecylamine, triundecylamine, tridodecylamine, and the like.

The content of the cross-linking accelerator in the acrylic rubber composition according to the present invention is preferably 0.1 to 10 parts by weight, more preferably 0.5 to 7.5 parts by weight, particularly preferably 1 to 5 parts by weight relative to 100 parts by weight of the acrylic rubber. A content of the cross-linking accelerator within this range can result in a cross-linked rubber having further improved tensile strength and compression set resistance.

Besides the ingredients described above, the acrylic rubber composition according to the present invention can contain a compounding agent usually used in the rubber processing field. Examples of such a compounding agent include reinforcing fillers such as silica and carbon black; non-reinforcing fillers such as calcium carbonate and clay; antioxidants; light stabilizers; scorch preventing agents; plasticizers; processing aids; tackifiers; lubricants; greases; flame retardants; antifungal agents; antistatic agents; colorants; cross-linking retarders; and the like. These compounding agents can be compounded in any amount in the range not impairing the object and effect of the present invention, and can be appropriately compounded in amounts according to the purpose of compounding.

Furthermore, the acrylic rubber composition according to the present invention may further comprise a rubber other than the acrylic rubber according to the present invention, an elastomer, a resin, and the like in the range not impairing the effect of the present invention. For example, the followings can be compounded: acrylic rubber other than the acrylic rubber according to the present invention, rubber other than acrylic rubber such as natural rubber, polybutadiene rubber, polyisoprene rubber, styrene-butadiene rubber, acrylonitrile-butadiene rubber, silicon rubber, and fluororubber; elastomers such as olefin elastomers, styrene elastomers, vinyl chloride elastomers, polyester elastomers, polyamide elastomers, polyurethane elastomers, and polysiloxane elastomers; resins such as polyolefin resins, polystyrene resins, polyacrylic resins, polyphenylene ether resins, polyester resins, polycarbonate resins, polyamide resins, vinyl chloride resins, and fluorinated resins; and the like. The total compounding amount of the rubber other than the acrylic rubber according to the present invention, the elastomer, and the resin is preferably 50 parts by weight or less, more preferably 10 parts by weight or less, still more preferably 1 part by weight or less relative to 100 parts by weight of the acrylic rubber.

The acrylic rubber composition according to the present invention is prepared by compounding the cross-linking agent and a variety of compounding agents used as needed with the acrylic rubber, mixing and kneading these ingredients with a Banbury mixer or a kneader, and further kneading the ingredients using a kneading roll.

Although the ingredients can be compounded in any order, in a preferred order, ingredients which barely react or decompose by heat are sufficiently mixed, and then those which readily react or decompose by heat, such as a cross-linking agent, are mixed in a short time at a temperature at which the reaction and the decomposition thereof are avoided.

<Cross-linked rubber>

The cross-linked rubber according to the present invention is prepared by cross-linking the acrylic rubber composition according to the present invention described above.

The cross-linked rubber according to the present invention can be produced as follows: The acrylic rubber composition according to the present invention is formed with a forming machine which can form the acrylic rubber composition into a desired shape, such as an extruder, an injection molding machine, a compressor, a roll, and the like, and the formed product is cross-linked by heating into a cross-linked rubber having a fixed shape. In this case, cross-linking may be performed after the acrylic rubber composition is preliminarily formed, or cross-linking and forming may be performed at the same time. The forming temperature is usually 10 to 200°C, preferably 25 to 120°C. The cross-linking temperature is usually 130 to 220°C, preferably 150 to 190°C, and the cross-linking time is usually 2 minutes to 10 hours, preferably 3 minutes to 5 hours. The heating method may be appropriately selected from methods used in cross-linking of rubber, such as press heating, steam heating, oven heating, and hot air heating.

The cross-linked rubber according to the present invention may be further heated to undergo secondary cross-linking according to the shape and size of the cross-linked rubber. The secondary cross-linking is performed preferably for 1 to 48 hours, although the time varies according to the heating method, the cross-linking temperature, and the shape of the product. The heating method and temperature may be appropriately selected.

Because such a cross-linked rubber according to the present invention is produced using the acrylic rubber prepared by the production method according to the present invention, the cross-linked rubber has high heat resistance and high tensile strength. For this reason, utilizing such properties, the cross-linked rubber according to the present invention is suitably used as sealing materials such as O-rings, packings, oil seals, and bearing seals; gaskets; buffer materials, vibration insulators; coating materials for electric wires; industrial belts; tubes and hoses; sheets; and the like, for example, in broad fields of transportation machines such as automobiles, general machinery, and electrical apparatuses.

EXAMPLES

The present invention will now be more specifically described by way of Examples and Comparative Examples. In Examples, "parts" are expressed in terms of weight, unless otherwise specified.

A variety of physical properties were evaluated according to the following methods.

[Mooney viscosity (ML1+4, 100°C)]

The Mooney viscosity (polymer Mooney) of the acrylic rubber was measured according to JIS K6300.

[Content of aggregates in polymer emulsion after emulsion polymerization]

The solids content in a polymer emulsion after the emulsion polymerization (proportion where the entire polymer emulsion was 1) was measured. Then, 100 g of the polymer emulsion after the emulsion polymerization was precisely weighed, and was filtrated through a 200-mesh metal mesh made of SUS and having a known weight. The residue left on the metal mesh was washed with water several times to remove the polymer emulsion. The residue was dried at 105°C for 60 minutes, and the dry weight thereof was measured. Based on the following expression, the proportion (unit: wt%) of aggregates contained was determined:

$$\text{content (wt\%) of aggregates} = [(\alpha - \beta)/(\gamma \times \Delta)] \times 100$$

where $\alpha$ represents the total weight of the metal mesh and the dried aggregates after drying, $\beta$ represents the weight of the metal mesh, $\gamma$ represents the weight of the polymer emulsion, and $\Delta$ represents the solids content in the polymer emulsion.

The solids content in the polymer emulsion was determined by drying the polymer emulsion, and determining the solids content from the weight of the polymer emulsion before drying and that after drying based on the following

expression:

$$\text{solids content } (\Delta) \text{ in polymer emulsion} = (\text{weight after drying})/(\text{weight of polymer emulsion before drying})$$

[Content of antioxidant in acrylic rubber]

The acrylic rubber was dissolved in tetrahydrofuran, and was subjected to GPC measurement using tetrahydrofuran as a developing solvent to determine the content of the antioxidant in the acrylic rubber. Specifically, the integrated value of a peak corresponding to the molecular weight of the antioxidant used in production was determined from a chromatogram obtained by the GPC measurement. The integrated value was compared to the integrated value of a peak derived from the acrylic rubber. The weight ratio was determined from these integrated values and the molecular weights corresponding thereto to calculate the content of the antioxidant.

[Ash content in acrylic rubber]

The ash content (wt%) in the acrylic rubber was measured according to JIS K6228.

[Tensile strength and elongation]

An acrylic rubber composition was placed into a metal mold having a length of 15 cm, a width of 15 cm, and a depth of 0.2 cm. The acrylic rubber composition was then pressed at 170°C for 20 minutes under a pressure of 10 MPa to be primarily cross-linked. The primarily cross-linked product was then further heated in a geer oven at 170°C for 4 hours to be secondarily cross-linked. A sheet-shaped cross-linked rubber was thereby prepared. The resulting cross-linked rubber was punched out with a # 3 dumbbell into a test piece. In the next step, this test piece was used to measure the tensile strength and the elongation according to JIS K6251.

[Thermal aging test]

A test piece was prepared in the same manner as in the preparation of the test piece used in the evaluation of the tensile strength and elongation in the normal state described above, and was left to stand in a geer oven under an environment of 175°C for 504 hours. The test piece was then measured for tensile strength and elongation, and the thermal aging resistance was evaluated through comparison between the measured tensile strength and elongation and the tensile strength and elongation measured in the normal state above by the above-mentioned method. The tensile strength and the elongation were measured according to JIS K6251.
For the tensile strength, a greater value measured after heating of the sample indicates higher heat resistance. For the elongation, an elongation change ratio (percentage) closer to 0 indicates higher heat resistance, where the elongation change ratio is defined as a change ratio of the measured value of the sample after heating to the measured value (measured value in the normal state) of the non-thermally aged sample.

[Volume change ratio after immersion in water (water resistance)]

An acrylic rubber composition was placed into a metal mold having a length of 15 cm, a width of 15 cm, and a depth of 0.2 cm. The acrylic rubber composition was then pressed at 170°C for 20 minutes under a pressure of 10 MPa to be primarily cross-linked. The primarily cross-linked product was then further heated in a geer oven at 170°C for 4 hours to be secondarily cross-linked. A sheet-shaped cross-linked rubber was thereby prepared. A test piece of 3 cm × 2 cm × 0.2 cm was cut from the resulting sheet-shaped cross-linked rubber. According to JIS K6258, an immersion test of immersing the test piece in distilled water adjusted to a temperature of 80°C for 72 hours was performed. The change ratio of the volume of the test piece before and after the immersion was determined according to the following expression. It can be determined that a smaller change ratio of the volume before and after the immersion indicates a smaller degree of swelling of the cross-linked rubber by water and thus higher water resistance.

$$\text{change ratio (\%) of volume before and after immersion} = [(\text{volume of}$$

$$\text{test piece after immersion}) - (\text{volume of test piece before}$$

$$\text{immersion})]/(\text{volume of test piece before immersion}) \times 100$$

[Production Example 1]

46.294 parts of pure water, 49.3 parts of ethyl acrylate, 49.3 parts of n-butyl acrylate, 1.4 parts of mono-n-butyl fumarate, 0.567 parts of sodium lauryl sulfate (trade name "Emal 2FG", made by Kao Corporation) as an anionic surfactant, and 1.4 parts of polyoxyethylene dodecyl ether (trade name "EMALGEN 105", weight average molecular weight: about 1500, made by Kao Corporation) as a nonionic surfactant were placed into a mixing container provided with a homomixer, and the mixture was stirred to prepare a monomer emulsion.

In the next step, 170.853 parts of pure water and 2.97 parts of the monomer emulsion prepared above were placed into a polymerization reaction tank provided with a thermometer and a stirrer, and the mixture was cooled to a temperature of 12°C under a nitrogen stream. Then, 145.29 parts of the monomer emulsion prepared above, 0.00033 parts of ferrous sulfate as a reducing agent, 0.264 parts of sodium ascorbate as a reducing agent, and 7.72 parts of a 2.85 wt% aqueous solution of potassium persulfate (0.22 parts in terms of potassium persulfate) as a polymerization initiator were continuously added dropwise into the polymerization reaction tank over three hours. Subsequently, the reaction was continued for one hour in the state where the inner temperature of the polymerization reaction tank was kept at 23°C. After it was checked that the polymerization conversion ratio reached 95%, hydroquinone as a polymerization terminator was added to terminate the polymerization reaction. A polymer emulsion was thereby prepared. The content of aggregates in the resulting polymer emulsion was measured according to the method described above. No aggregates were observed in the polymer emulsion, that is, the content was 0 wt%. Furthermore, fouling caused by adhesion of aggregates was not observed inside the polymerization reaction tank (The same applied to Production Examples 2 to 13 described later).

Then, relative to 100 parts of the polymer emulsion prepared through polymerization, 0.1 parts (0.167 parts in terms of antioxidant relative to 100 parts of the total charged monomers used in preparation of the polymer emulsion (i.e., the total of ethyl acrylate, n-butyl acrylate, and mono-n-butyl fumarate)) of a 50 wt% aqueous dispersion of stearyl 3-(3,5-di-tert-butyl-4-hydroxyphenyl)propionate (trade name "Irganox 1076" made by BASF SE) as an antioxidant (prepared by combining and mixing 50 parts of stearyl (3,5-di-tert-butyl-4-hydroxyphenyl)propionate with 50 parts of a 0.2 wt% aqueous solution of sodium lauryl sulfate (trade name "Emal 2FG", made by Kao Corporation)), 0.011 parts (0.037 parts relative to 100 parts of the total charged monomers used in preparation of the polymer emulsion) of polyethylene oxide (weight average molecular weight (Mw) = 100000), and 0.075 parts (0.25 parts relative to 100 parts of the total charged monomers used in preparation of the polymer emulsion) of polyoxyethylene stearyl ether phosphoric acid as a lubricant (trade name "Phosphanol RL-210", weight average molecular weight: about 500, made by Toho Chemical Industry, Co., Ltd.) were mixed to prepare a liquid mixture. The resulting liquid mixture was transferred to a coagulation tank, and 60 parts of industrial water was added relative to 100 parts of the liquid mixture. The liquid mixture was heated to 85°C. While the liquid mixture was being stirred at a temperature of 85°C, 3.3 parts of sodium sulfate as a coagulant (10 parts of relative to 100 parts of the polymer contained in the liquid mixture) was continuously added to solidify the polymer. The resulting mixture was then filtered to obtain hydrous crumbs of Acrylic rubber (A1).

In the next step, 388 parts of industrial water was added relative to 100 parts (on a solids content basis) of the resulting hydrous crumbs, followed by stirring at room temperature for 5 minutes in the coagulation tank. Water was then discharged from the coagulation tank to complete washing of the hydrous crumbs with water. Such an operation to wash hydrous crumbs with water was repeated four times in this Production Example.

In the next step, an aqueous solution of sulfuric acid (pH = 3) prepared by mixing 388 parts of industrial water and 0.13 parts of concentrated sulfuric acid was added relative to 100 parts (on a solids content basis) of the hydrous crumbs washed with water, followed by stirring at room temperature for 5 minutes in the coagulation tank. The liquid was then discharged from the coagulation tank to complete washing of the hydrous crumbs with the acid. The measurement of the pH of the hydrous crumbs after acid washing (pH of water in the hydrous crumbs) showed that pH = 3. In the next step, 388 parts of pure water was added relative to 100 parts (on a solids content basis) of hydrous crumbs washed with the acid, followed by stirring at room temperature for 5 minutes in the coagulation tank. Water was then discharged from the coagulation tank to complete washing of the hydrous crumbs with pure water. The hydrous crumbs washed with pure water were dried in a hot air dryer at 160°C for 10 minutes to yield solid Acrylic rubber (A1). At this time, adhesion of the acrylic rubber to the hot air dryer was not observed.

Acrylic rubber (A1) had a Mooney viscosity (ML1+4, 100°C) of 33. The composition of Acrylic rubber (A1) consisted of 49.3 wt% of ethyl acrylate unit, 49.3 wt% of n-butyl acrylate unit, and 1.4 wt% of mono-n-butyl fumarate unit. Acrylic rubber (A1) was measured for the ash content and the antioxidant content in Acrylic rubber (A1) according to the methods described above. The results are shown in Table 1.

[Production Example 2]

A liquid mixture was prepared using a polymer emulsion prepared in the same manner as in Production Example 1, and was coagulated in the same manner as in Production Example 1 except that the amount of the 50 wt% aqueous dispersion of stearyl 3-(3,5-di-tert-butyl-4-hydroxyphenyl)propionate added as the antioxidant was changed from 0.1 parts to 0.3 parts relative to 100 parts by weight of the polymer emulsion prepared in the same manner as in Production Example 1 (0.5 parts in terms of antioxidant relative to 100 parts of the total charged monomers used in preparation of the polymer emulsion). Hydrous crumbs of Acrylic rubber (A2) were thereby yielded.
In the next step, the resulting hydrous crumbs of Acrylic rubber (A2) were subjected to washing with water four times, acid washing, washing with pure water, and drying in a hot air dryer in the same manner as in Production Example 1 to yield solid Acrylic rubber (A2). Acrylic rubber (A2) had a Mooney viscosity (ML1+4, 100°C) of 33. The composition of Acrylic rubber (A2) consisted of 49.3 wt% of ethyl acrylate unit, 49.3 wt% of n-butyl acrylate unit, and 1.4 wt% of mono-n-butyl fumarate unit. Acrylic rubber (A2) was measured for the ash content and the antioxidant content therein according to the methods described above. The results are shown in Table 1.

[Production Example 3]

A liquid mixture was prepared using a polymer emulsion prepared in the same manner as in Production Example 1, and was coagulated in the same manner as in Production Example 1 except that the amount of the 50 wt% aqueous dispersion of stearyl 3-(3,5-di-tert-butyl-4-hydroxyphenyl)propionate added as the antioxidant was changed from 0.1 parts to 0.6 parts relative to 100 parts by weight of the polymer emulsion prepared in the same manner as in Production Example 1 (1 part in terms of antioxidant relative to 100 parts of the total charged monomers used in preparation of the polymer emulsion). Hydrous crumbs of Acrylic rubber (A3) were thereby yielded.
In the next step, the resulting hydrous crumbs of Acrylic rubber (A3) were subjected to washing with water four times, acid washing, washing with pure water, and drying in a hot air dryer in the same manner as in Production Example 1 to yield solid Acrylic rubber (A3). Acrylic rubber (A3) had a Mooney viscosity (ML1+4, 100°C) of 33. The composition of Acrylic rubber (A3) consisted of 49.3 wt% of ethyl acrylate unit, 49.3 wt% of n-butyl acrylate unit, and 1.4 wt% of mono-n-butyl fumarate unit. Acrylic rubber (A3) was measured for the ash content and the antioxidant content therein according to the methods described above. The results are shown in Table 1.

[Production Example 4]

A liquid mixture was prepared using a polymer emulsion prepared in the same manner as in Production Example 1, and was coagulated in the same manner as in Production Example 1 except that 0.6 parts (1 part relative to 100 parts of the total charged monomers used in preparation of the polymer emulsion) of a 50 wt% aqueous dispersion of 2,4-bis[(octylthio)methyl]-6-methylphenol (trade name "Irganox 1520L", made by BASF SE) (prepared by combining and mixing 50 parts of 2,4-bis[(octylthio)methyl]-6-methylphenol with 50 parts of a 0.2 wt% aqueous solution of sodium lauryl sulfate (trade name "Emal 2FG", made by Kao Corporation)) was added as an antioxidant relative to 100 parts by weight of the polymer emulsion prepared in the same manner as in Production Example 1 instead of the 50 wt% aqueous dispersion of stearyl 3-(3,5-di-tert-butyl-4-hydroxyphenyl)propionate. Hydrous crumbs of Acrylic rubber (A4) were thereby yielded.
In the next step, the resulting hydrous crumbs of Acrylic rubber (A4) were subjected to washing with water four times, acid washing, washing with pure water, and drying in a hot air dryer in the same manner as in Production Example 1 to yield solid Acrylic rubber (A4). Acrylic rubber (A4) had a Mooney viscosity (ML1+4, 100°C) of 33. The composition of Acrylic rubber (A4) consisted of 49.3 wt% of ethyl acrylate unit, 49.3 wt% of n-butyl acrylate unit, and 1.4 wt% of mono-n-butyl fumarate unit. Acrylic rubber (A4) was measured for the ash content and the antioxidant content therein according to the methods described above. The results are shown in Table 1.

[Production Example 5]

A liquid mixture was prepared using a polymer emulsion prepared in the same manner as in Production Example 1, and was coagulated in the same manner as in Production Example 1 except that 0.6 parts (1 part relative to 100 parts of the total charged monomers used in preparation of the polymer emulsion) of a 50 wt% aqueous dispersion of 2-mercaptobenzimidazole (trade name "NOCRAC MB", made by Ouchi Shinko Chemical Industrial Co., Ltd.) (prepared by combining and mixing 50 parts of 2-mercaptobenzimidazole with 50 parts of a 0.2 wt% aqueous solution of sodium lauryl sulfate (trade name "Emal 2FG", made by Kao Corporation)) was added as an antioxidant relative to 100 parts by weight of the polymer emulsion prepared in the same manner as in Production Example 1 instead of the 50 wt% aqueous dispersion of stearyl 3-(3,5-di-tert-butyl-4-hydroxyphenyl)propionate. Hydrous crumbs of Acrylic rubber (A5) were thereby yielded.

In the next step, the resulting hydrous crumbs of Acrylic rubber (A5) were subjected to washing with water four times, acid washing, washing with pure water, and drying in a hot air dryer in the same manner as in Production Example 1 to yield solid Acrylic rubber (A5). Acrylic rubber (A5) had a Mooney viscosity (ML1+4, 100°C) of 32. The composition of Acrylic rubber (A5) consisted of 49.3 wt% of ethyl acrylate unit, 49.3 wt% of n-butyl acrylate unit, and 1.4 wt% of mono-n-butyl fumarate unit. Acrylic rubber (A5) was measured for the ash content and the antioxidant content therein according to the methods described above. The results are shown in Table 1.

[Production Example 6]

A liquid mixture was prepared using a polymer emulsion prepared in the same manner as in Production Example 1, and was coagulated in the same manner as in Production Example 1 except that 0.6 parts (1 part relative to 100 parts of the total charged monomers used in preparation of the polymer emulsion) of a 50 wt% aqueous dispersion of 4,4'-bis($\alpha,\alpha$-dimethylbenzyl)diphenylamine (trade name "NOCRAC CD", made by Ouchi Shinko Chemical Industrial Co., Ltd.) (prepared by combining and mixing 50 parts of 4,4'-bis($\alpha,\alpha$-dimethylbenzyl)diphenylamine with 50 parts of a 0.2 wt% aqueous solution of sodium lauryl sulfate (trade name "Emal 2FG", made by Kao Corporation)) was added as an antioxidant relative to 100 parts by weight of the polymer emulsion prepared in the same manner as in Production Example 1 instead of the 50 wt% aqueous dispersion of stearyl 3-(3,5-di-tert-butyl-4-hydroxyphenyl)propionate. Hydrous crumbs of Acrylic rubber (A6) were thereby yielded.

In the next step, the resulting hydrous crumbs of Acrylic rubber (A6) were subjected to washing with water four times, acid washing, washing with pure water, and drying in a hot air dryer in the same manner as in Production Example 1 to yield solid Acrylic rubber (A6). Acrylic rubber (A6) had a Mooney viscosity (ML1+4, 100°C) of 33. The composition of Acrylic rubber (A6) consisted of 49.3 wt% of ethyl acrylate unit, 49.3 wt% of n-butyl acrylate unit, and 1.4 wt% of mono-n-butyl fumarate unit. Acrylic rubber (A6) was measured for the ash content and the antioxidant content therein according to the methods described above. The results are shown in Table 1.

[Production Example 7]

A liquid mixture was prepared using a polymer emulsion prepared in the same manner as in Production Example 1, and was coagulated in the same manner as in Production Example 1 except that 0.6 parts (1 part relative to 100 parts of the total charged monomers used in preparation of the polymer emulsion) of a 50 wt% aqueous dispersion of mono-(di-, or tri-)($\alpha$-methylbenzyl)phenol (trade name "NOCRAC SP", made by Ouchi Shinko Chemical Industrial Co., Ltd.) (prepared by combining and mixing 50 parts of mono-(di-, or tri-)(a-methylbenzyl)phenol with 50 parts of a 0.2 wt% aqueous solution of sodium lauryl sulfate (trade name "Emal 2FG", made by Kao Corporation)) was added as an antioxidant relative to 100 parts by weight of the polymer emulsion prepared in the same manner as in Production Example 1 instead of the 50 wt% aqueous dispersion of stearyl 3-(3,5-di-tert-butyl-4-hydroxyphenyl)propionate. Hydrous crumbs of Acrylic rubber (A7) were thereby yielded.

In the next step, the resulting hydrous crumbs of Acrylic rubber (A7) were subjected to washing with water four times, acid washing, washing with pure water, and drying in a hot air dryer in the same manner as in Production Example 1 to yield solid Acrylic rubber (A7). Acrylic rubber (A7) had a Mooney viscosity (ML1+4, 100°C) of 33. The composition of Acrylic rubber (A7) consisted of 49.3 wt% of ethyl acrylate unit, 49.3 wt% of n-butyl acrylate unit, and 1.4 wt% of mono-n-butyl fumarate unit. Acrylic rubber (A7) was measured for the ash content and the antioxidant content therein according to the methods described above. The results are shown in Table 1.

[Production Example 8]

A liquid mixture was prepared using a polymer emulsion prepared in the same manner as in Production Example 1, and was coagulated in the same manner as in Production Example 1 except that 0.3 parts (1 part relative to 100 parts of the total charged monomers used in preparation of the polymer emulsion) of stearyl 3-(3,5-di-tert-butyl-4-hydroxyphenyl)propionate as the antioxidant was added relative to 100 parts by weight of the polymer emulsion prepared in the same manner as in Production Example 1 as it was, rather than in the form of an aqueous dispersion. Hydrous crumbs of Acrylic rubber (A8) were thereby yielded.

In the next step, the resulting hydrous crumbs of Acrylic rubber (A8) were subjected to washing with water four times, acid washing, washing with pure water, and drying in a hot air dryer in the same manner as in Production Example 1 to yield solid Acrylic rubber (A8). Acrylic rubber (A8) had a Mooney viscosity (ML1+4, 100°C) of 28. The composition of Acrylic rubber (A8) consisted of 49.3 wt% of ethyl acrylate unit, 49.3 wt% of n-butyl acrylate unit, and 1.4 wt% of mono-n-butyl fumarate unit. Acrylic rubber (A8) was measured for the ash content and the antioxidant content therein according to the methods described above. The results are shown in Table 1.

[Production Example 9]

A liquid mixture was prepared using a polymer emulsion prepared in the same manner as in Production Example 1, and was coagulated in the same manner as in Production Example 4 except that 0.3 parts (1 part relative to 100 parts of the total charged monomers used in preparation of the polymer emulsion) of 2,4-bis[(octylthio)methyl]-6-methylphenol as the antioxidant was added relative to 100 parts by weight of the polymer emulsion prepared in the same manner as in Production Example 1 as it was, rather than in the form of an aqueous dispersion. Hydrous crumbs of Acrylic rubber (A9) were thereby yielded.

In the next step, the resulting hydrous crumbs of Acrylic rubber (A9) were subjected to washing with water four times, acid washing, washing with pure water, and drying in a hot air dryer in the same manner as in Production Example 1 to yield solid Acrylic rubber (A9). Acrylic rubber (A9) had a Mooney viscosity (ML1+4, 100°C) of 27. The composition of Acrylic rubber (A9) consisted of 49.3 wt% of ethyl acrylate unit, 49.3 wt% of n-butyl acrylate unit, and 1.4 wt% of mono-n-butyl fumarate unit. Acrylic rubber (A9) was measured for the ash content and the antioxidant content therein according to the methods described above. The results are shown in Table 1.

[Production Example 10]

A liquid mixture was prepared using a polymer emulsion prepared in the same manner as in Production Example 1, and was coagulated in the same manner as in Production Example 5 except that 0.3 parts (1 part relative to 100 parts of the total charged monomers used in preparation of the polymer emulsion) of 2-mercaptobenzimidazole as the antioxidant was added relative to 100 parts by weight of the polymer emulsion prepared in the same manner as in Production Example 1 as it was, rather than in the form of an aqueous dispersion. Hydrous crumbs of Acrylic rubber (A10) were thereby yielded.

In the next step, the resulting hydrous crumbs of Acrylic rubber (A10) were subjected to washing with water four times, acid washing, washing with pure water, and drying in a hot air dryer in the same manner as in Production Example 1 to yield solid Acrylic rubber (A10). Acrylic rubber (A10) had a Mooney viscosity (ML1+4, 100°C) of 29. The composition of Acrylic rubber (A10) consisted of 49.3 wt% of ethyl acrylate unit, 49.3 wt% of n-butyl acrylate unit, and 1.4 wt% of mono-n-butyl fumarate unit. Acrylic rubber (A10) was measured for the ash content and the antioxidant content therein according to the methods described above. The results are shown in Table 1.

[Production Example 11]

A liquid mixture was prepared using a polymer emulsion prepared in the same manner as in Production Example 1, and was coagulated in the same manner as in Production Example 6 except that 0.3 parts (1 part relative to 100 parts of the total charged monomers used in preparation of the polymer emulsion) of 4,4'-bis($\alpha,\alpha$-dimethylbenzyl)diphenylamine as the antioxidant was added relative to 100 parts by weight of the polymer emulsion prepared in the same manner as in Production Example 1 as it was, rather than in the form of an aqueous dispersion. Hydrous crumbs of Acrylic rubber (A11) were thereby yielded.

In the next step, the resulting hydrous crumbs of Acrylic rubber (A11) were subjected to washing with water four times, acid washing, washing with pure water, and drying in a hot air dryer in the same manner as in Production Example 1 to yield solid Acrylic rubber (A11). Acrylic rubber (A11) had a Mooney viscosity (ML1+4, 100°C) of 27. The composition of Acrylic rubber (A11) consisted of 49.3 wt% of ethyl acrylate unit, 49.3 wt% of n-butyl acrylate unit, and 1.4 wt% of mono-n-butyl fumarate unit. Acrylic rubber (A11) was measured for the ash content and the antioxidant content therein according to the methods described above. The results are shown in Table 1.

[Production Example 12]

A liquid mixture was prepared using a polymer emulsion prepared in the same manner as in Production Example 1, and was coagulated in the same manner as in Production Example 7 except that 0.3 parts (1 part relative to 100 parts of the total charged monomers used in preparation of the polymer emulsion) of mono- (di-, or tri-)(a-methylbenzyl)phenol as the antioxidant was added relative to 100 parts by weight of the polymer emulsion prepared in the same manner as in Production Example 1 as it was, rather than in the form of an aqueous dispersion. Hydrous crumbs of Acrylic rubber (A12) were thereby yielded.

In the next step, the resulting hydrous crumbs of Acrylic rubber (A12) were subjected to washing with water four times, acid washing, washing with pure water, and drying in a hot air dryer in the same manner as in Production Example 1 to yield solid Acrylic rubber (A12). Acrylic rubber (A12) had a Mooney viscosity (ML1+4, 100°C) of 28. The composition of Acrylic rubber (A12) consisted of 49.3 wt% of ethyl acrylate unit, 49.3 wt% of n-butyl acrylate unit, and 1.4 wt% of mono-n-butyl fumarate unit. Acrylic rubber (A12) was measured for the ash content and the antioxidant content therein according to the methods described above. The results are shown in Table 1.

[Production Example 13]

A liquid mixture was prepared using a polymer emulsion prepared in the same manner as in Production Example 1, and was coagulated in the same manner as in Production Example 1 except that 1 part (3.33 parts relative to 100 parts of the total charged monomers used in preparation of the polymer emulsion) of stearyl 3-(3,5-di-tert-butyl-4-hydroxyphenyl)propionate as the antioxidant was added relative to 100 parts by weight of the polymer emulsion prepared in the same manner as in Production Example 1 as it was, rather than in the form of an aqueous dispersion. Hydrous crumbs of Acrylic rubber (A13) were thereby yielded.

In the next step, the resulting hydrous crumbs of Acrylic rubber (A13) were subjected to washing with water four times, acid washing, washing with pure water, and drying in a hot air dryer in the same manner as in Production Example 1 to yield solid Acrylic rubber (A13). Acrylic rubber (A13) had a Mooney viscosity (ML1+4, 100°C) of 27. The composition of Acrylic rubber (A13) consisted of 49.3 wt% of ethyl acrylate unit, 49.3 wt% of n-butyl acrylate unit, and 1.4 wt% of mono-n-butyl fumarate unit. Acrylic rubber (A13) was measured for the ash content and the antioxidant content therein according to the methods described above. The results are shown in Table 1.

[Production Example 14]

46.294 parts of pure water, 49.3 parts of ethyl acrylate, 49.3 parts of n-butyl acrylate, 1.4 parts of mono-n-butyl fumarate, 0.567 parts of sodium lauryl sulfate (trade name "Emal 2FG", made by Kao Corporation) as an anionic surfactant, 1.4 parts of polyoxyethylene dodecyl ether (trade name "EMALGEN 105", made by Kao Corporation) as a nonionic surfactant, and 1 part of stearyl 3-(3,5-di-tert-butyl-4-hydroxyphenyl)propionate (trade name "Irganox 1076", made by BASF SE) as an antioxidant were placed into a mixing container provided with a homomixer, and the mixture was stirred to prepare a monomer emulsion.

In the next step, 170.853 parts of pure water and 2.97 parts of the monomer emulsion prepared above were placed into a polymerization reaction tank provided with a thermometer and a stirrer, and the mixture was cooled to a temperature of 12°C under a nitrogen stream. Then, 146.29 parts of the monomer emulsion prepared above, 0.00033 parts of ferrous sulfate as a reducing agent, 0.264 parts of sodium ascorbate as a reducing agent, and 7.72 parts of a 2.85 wt% aqueous solution of potassium persulfate (0.22 parts of potassium persulfate) as a polymerization initiator were continuously added dropwise into the polymerization reaction tank over 3 hours. Subsequently, the reaction was continued for one hour in the state where the inner temperature of the polymerization reaction tank was kept at 23°C. After it was checked that the polymerization conversion ratio reached 95%, hydroquinone as a polymerization terminator was added to terminate the polymerization reaction. A polymer emulsion was thus prepared. The content of aggregates in the resulting polymer emulsion was measured by the method described above. The content of aggregates was 0.4 wt%, and fouling caused by adhesion of aggregates was observed inside the polymerization reaction tank.

0.011 parts (0.037 parts relative to 100 parts of the total charged monomers used in preparation of the polymer emulsion) of polyethylene oxide (weight average molecular weight (Mw) = 100000) and 0.075 parts (0.25 parts relative to 100 parts of the total charged monomers used in preparation of the polymer emulsion) of polyoxyethylene stearyl ether phosphoric acid as a lubricant (trade name "Phosphanol RL-210", made by Toho Chemical Industry, Co., Ltd.) were mixed relative to 100 parts of the polymer emulsion prepared through polymerization to prepare a liquid mixture. The resulting liquid mixture was then transferred to a coagulation tank, 60 parts of industrial water was added relative to 100 parts of the liquid mixture. The liquid mixture was heated to 85°C. While the liquid mixture was being stirred at a temperature of 85°C, 3.3 parts of sodium sulfate as a coagulant (10 parts relative to 100 parts of polymer contained in the liquid mixture) was continuously added to solidify the polymer. Hydrous crumbs of Acrylic rubber (A14) were thereby yielded.

In the next step, the resulting hydrous crumbs of Acrylic rubber (A14) were subjected to washing with water four times, acid washing, washing with pure water, and drying in a hot air dryer in the same manner as in Production Example 1 to yield solid Acrylic rubber (A14). Acrylic rubber (A14) had a Mooney viscosity (ML1+4, 100°C) of 30. The composition of Acrylic rubber (A14) consisted of 49.3 wt% of ethyl acrylate unit, 49.3 wt% of n-butyl acrylate unit, and 1.4 wt% of mono-n-butyl fumarate unit. Acrylic rubber (A14) was measured for the ash content and the antioxidant content therein according to the methods described above. The results are shown in Table 1.

[Production Example 15]

A monomer emulsion was prepared in the same manner as in Production Example 14 except that in the preparation of the monomer emulsion, as the antioxidant, stearyl 3-(3,5-di-tert-butyl-4-hydroxyphenyl)propionate was replaced with 1 part of 2,4-bis[(octylthio)methyl]-6-methylphenol (trade name "Irganox 1520L", made by BASF SE).

Emulsion polymerization was performed using the resulting monomer emulsion in the same manner as in Production Example 14 to prepare a polymer emulsion. The content of aggregates in the resulting polymer emulsion was measured. The content of aggregates was 0.5 wt%, and fouling caused by adhesion of aggregates was observed inside the polymerization reaction tank.

In the next step, a liquid mixture was prepared using the resulting polymer emulsion in the same manner as in Production Example 14, and the polymer was solidified. Hydrous crumbs of Acrylic rubber (A15) were thereby yielded. In the next step, the resulting hydrous crumbs of Acrylic rubber (A15) were subjected to washing with water four times, acid washing, washing with pure water, and drying in a hot air dryer in the same manner as in Production Example 1 to yield solid Acrylic rubber (A15). Acrylic rubber (A15) had a Mooney viscosity (ML1+4, 100°C) of 29. The composition of Acrylic rubber (A15) consisted of 49.3 wt% of ethyl acrylate unit, 49.3 wt% of n-butyl acrylate unit, and 1.4 wt% of mono-n-butyl fumarate unit. Acrylic rubber (A15) was measured for the ash content and the antioxidant content therein according to the methods described above. The results are shown in Table 1.

[Production Example 16]

A monomer emulsion was prepared in the same manner as in Production Example 14 except that in the preparation of the monomer emulsion, as the antioxidant, stearyl 3-(3,5-di-tert-butyl-4-hydroxyphenyl)propionate was replaced with 1 part of 2-mercaptobenzimidazole (trade name "NOCRAC MB", made by Ouchi Shinko Chemical Industrial Co., Ltd.).

Emulsion polymerization was performed using the resulting monomer emulsion in the same manner as in Production Example 14 to prepare a polymer emulsion. The content of aggregates in the polymer emulsion was measured by the method described above. The content of aggregates was 0.4 wt%, and fouling caused by adhesion of aggregates was observed inside the polymerization reaction tank.

In the next step, a liquid mixture was prepared using the resulting polymer emulsion in the same manner as in Production Example 14, and the polymer was solidified. Hydrous crumbs of Acrylic rubber (A16) were thereby yielded. In the next step, the resulting hydrous crumbs of Acrylic rubber (A16) were subjected to washing with water four times, acid washing, washing with pure water, and drying in a hot air dryer in the same manner as in Production Example 1 to yield solid Acrylic rubber (A16). Acrylic rubber (A16) had a Mooney viscosity (ML1+4, 100°C) of 28. The composition of Acrylic rubber (A16) consisted of 49.3 wt% of ethyl acrylate unit, 49.3 wt% of n-butyl acrylate unit, and 1.4 wt% of mono-n-butyl fumarate unit. Acrylic rubber (A16) was measured for the ash content and the antioxidant content therein according to the methods described above. The results are shown in Table 1.

[Production Example 17]

A monomer emulsion was prepared in the same manner as in Production Example 14 except that in the preparation of the monomer emulsion, as the antioxidant, stearyl 3-(3,5-di-tert-butyl-4-hydroxyphenyl)propionate was replaced with 1 part of 4,4'-bis($\alpha,\alpha$-dimethylbenzyl)diphenylamine (trade name "NOCRAC CD", made by Ouchi Shinko Chemical Industrial Co., Ltd.).

Emulsion polymerization was performed using the resulting monomer emulsion in the same manner as in Production Example 14 to prepare a polymer emulsion. The content of aggregates in the polymer emulsion was measured by the method described above. The content of aggregates was 0.3 wt%, and fouling caused by adhesion of aggregates was observed inside the polymerization reaction tank.

In the next step, a liquid mixture was prepared using the resulting polymer emulsion in the same manner as in Production Example 14, and the polymer was solidified. Hydrous crumbs of Acrylic rubber (A17) were thereby yielded. In the next step, the resulting hydrous crumbs of Acrylic rubber (A17) were subjected to washing with water four times, acid washing, washing with pure water, and drying in a hot air dryer in the same manner as in Production Example 1 to yield solid Acrylic rubber (A17). Acrylic rubber (A17) had a Mooney viscosity (ML1+4, 100°C) of 28. The composition of Acrylic rubber (A17) consisted of 49.3 wt% of ethyl acrylate unit, 49.3 wt% of n-butyl acrylate unit, and 1.4 wt% of mono-n-butyl fumarate unit. Acrylic rubber (A17) was measured for the ash content and the antioxidant content therein according to the methods described above. The results are shown in Table 1.

[Production Example 18]

A monomer emulsion was prepared in the same manner as in Production Example 14 except that in the preparation of the monomer emulsion, as the antioxidant, stearyl 3-(3,5-di-tert-butyl-4-hydroxyphenyl)propionate was replaced with 1 part of mono- (di-, or tri-)(a-methylbenzyl)phenol (trade name "NOCRAC SP", made by Ouchi Shinko Chemical Industrial Co., Ltd.).

Emulsion polymerization was performed using the resulting monomer emulsion in the same manner as in Production Example 14 to prepare a polymer emulsion. The content of aggregates in the polymer emulsion was measured by the method described above. The content of aggregates was 0.4 wt%, and fouling caused by adhesion of aggregates was observed inside the polymerization reaction tank.

In the next step, a liquid mixture was prepared using the resulting polymer emulsion in the same manner as in Production Example 14, and the polymer was solidified. Hydrous crumbs of Acrylic rubber (A18) were thereby yielded. In the next step, the resulting hydrous crumbs of Acrylic rubber (A18) were subjected to washing with water four times, acid washing, washing with pure water, and drying in a hot air dryer in the same manner as in Production Example 1 to yield solid Acrylic rubber (A18). Acrylic rubber (A18) had a Mooney viscosity (ML1+4, 100°C) of 29. The composition of Acrylic rubber (A18) consisted of 49.3 wt% of ethyl acrylate unit, 49.3 wt% of n-butyl acrylate unit, and 1.4 wt% of mono-n-butyl fumarate unit. Acrylic rubber (A18) was measured for the ash content and the antioxidant content therein according to the methods described above. The results are shown in Table 1.

[Production Example 19]

A monomer emulsion was prepared in the same manner as in Production Example 14 except that that in the preparation of the monomer emulsion, as the antioxidant, stearyl 3-(3,5-di-tert-butyl-4-hydroxyphenyl)propionate was not compounded.

Emulsion polymerization was performed using the resulting monomer emulsion in the same manner as in Production Example 14 to prepare a polymer emulsion. The content of aggregates in the polymer emulsion was measured by the method described above. No aggregates were observed, that is, the content was 0 wt%.

In the next step, a liquid mixture was prepared using the resulting polymer emulsion in the same manner as in Production Example 14, and the polymer was solidified. Hydrous crumbs of Acrylic rubber (A19) were thereby yielded. In the next step, the resulting hydrous crumbs of Acrylic rubber (A19) were subjected to washing with water four times, acid washing, washing with pure water, and drying in a hot air dryer in the same manner as in Production Example 1 to yield solid Acrylic rubber (A19). Acrylic rubber (A19) had a Mooney viscosity (ML1+4, 100°C) of 27. The composition of Acrylic rubber (A19) consisted of 49.3 wt% of ethyl acrylate unit, 49.3 wt% of n-butyl acrylate unit, and 1.4 wt% of mono-n-butyl fumarate unit. Acrylic rubber (A19) was measured for the ash content and the antioxidant content therein according to the methods described above. The results are shown in Table 1.

[Example 1]

60 parts of carbon black (trade name "SEAST SO", made by Tokai Carbon Co., Ltd.), 2 parts of stearic acid, 1 part of ester wax (trade name "GLECK G-8205", made by DIC Corporation), and 2 parts of 4,4'-bis($\alpha,\alpha$-dimethylbenzyl)diphenylamine (trade name "NOCRAC CD", made by Ouchi Shinko Chemical Industrial Co., Ltd.) were added relative to 100 parts of Acrylic rubber (A1) prepared in Production Example 1, and were mixed at 50°C for 5 minutes using a Banbury mixer. In the next step, the resulting mixture was transferred to a roll at 50°C. 0.5 parts of hexamethylenediamine carbamate (trade name "Diak#1", made by Dupont Dow Elastomers LLC, aliphatic polyvalent amine compound) and 2 parts of 1,3-di-o-tolylguanidine (trade name "NOCCELER DT", made by Ouchi Shinko Chemical Industrial Co., Ltd., cross-linking accelerator) were compounded thereto, and the mixture was kneaded to prepare an acrylic rubber composition.

The resulting acrylic rubber composition was subjected to measurement of tensile strength and elongation and the thermal aging test, and was evaluated according to the methods described above. The results are shown in Table 2.

[Examples 2 to 7]

Acrylic rubber compositions were prepared in the same manner as in Example 1 except that Acrylic rubber (A1) prepared in Production Example 1 was replaced with Acrylic rubbers (A2) to (A7) prepared in Production Examples 2 to 7 respectively, and were measured and evaluated in the same manner as in Example 1. The results are shown in Table 2.

[Comparative Examples 1 to 12]

Acrylic rubber compositions were prepared in the same manner as in Example 1 except that Acrylic rubber (A1) prepared in Production Example 1 was replaced with Acrylic rubbers (A8) to (A19) prepared in Production Examples 8 to 19 respectively, and were measured and evaluated in the same manner as in Example 1. The results are shown in Table 2.

[Table 1]

Table 1

| | | | Production Example | | | | | | | | | | | | | | | | | | |
|---|---|---|---|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 | 17 | 18 | 19 |
| Types of Acrylic rubber | | | (A1) | (A2) | (A3) | (A4) | (A5) | (A6) | (A7) | (A8) | (A9) | (A10) | (A11) | (A12) | (A13) | (A14) | (A15) | (A16) | (A17) | (A18) | (A19) |
| Monomer emulsion composition (*1) | Pure water | (parts) | 46.294 | 46.294 | 46.294 | 46.294 | 46.294 | 46.294 | 46.294 | 46.294 | 46.294 | 46.294 | 46.294 | 46.294 | 46.294 | 46.294 | 46.294 | 46.294 | 46.294 | 46.294 | 46.294 |
| | Ethyl acrylate | (parts) | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 |
| | n-Butyl acrylate | (parts) | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 | 49.3 |
| | Mono-n-butyl fumarate | (parts) | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| | Sodium lauryl sulfate (emulsifier) | (parts) | 0.567 | 0.567 | 0.567 | 0.567 | 0.567 | 0.567 | 0.567 | 0.567 | 0.567 | 0.567 | 0.567 | 0.567 | 0.567 | 0.567 | 0.567 | 0.567 | 0.567 | 0.567 | 0.567 |
| | Polyoxyethylene dodecyl ether (emulsifier) | (parts) | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 | 1.4 |
| | Stearyl 3-(3,5-di-tert-butyl-4-hydroxyphenyl)propionate (antioxidant) | (parts) | | | | | | | | | | | | | | 1 | | | | | |
| | 2,4-Bis[(octylthio)methyl]-6-methylphenol (antioxidant) | (parts) | | | | | | | | | | | | | | | 1 | | | | |
| | 2-Mercaptobenzimidazole (antioxidant) | (parts) | | | | | | | | | | | | | | | | 1 | | | |
| | 4,4'-Bis(α,α-dimethylbenzyl)diphenylamine (antioxidant) | (parts) | | | | | | | | | | | | | | | | | 1 | | |
| | Mono-(di-, or tri-)(α-methylbenzyl)phenol (antioxidant) | (parts) | | | | | | | | | | | | | | | | | | 1 | |
| Polymer emulsion after emulsion polymerization | Amount of aggregates in polymer emulsion after emulsion polymerization | (wt%) | 0 | 0 | 0 | 0 | 0 | 0 | 0 | 0 | 0 | 0 | 0 | 0 | 0 | 0.4 | 0.5 | 0.4 | 0.3 | 0.4 | 0 |
| Compounding agent added to polymer emulsion before coagulation (*2) | Stearyl 3-(3,5-di-tert-butyl-4-hydroxyphenyl)propionate (antioxidant) | (parts) | 0.05 | 0.15 | 0.3 | | | | | 0.3 | | | | | 1 | | | | | | |
| | 2,4-Bis[(octylthio)methyl]-6-methylphenol (antioxidant) | (parts) | | | | 0.3 | | | | | 0.3 | | | | | | | | | | |
| | 2-Mercaptobenzimidazole (antioxidant) | (parts) | | | | | 0.3 | | | | | 0.3 | | | | | | | | | |
| | 4,4'-Bis(α,α-dimethylbenzyl)diphenylamine (antioxidant) | (parts) | | | | | | 0.3 | | | | | 0.3 | | | | | | | | |
| | Mono-(di-, or tri-)(α-methylbenzyl)phenol (antioxidant) | (parts) | | | | | | | 0.3 | | | | | 0.3 | | | | | | | |
| | Polyethylene oxide | (parts) | 0.011 | 0.011 | 0.011 | 0.011 | 0.011 | 0.011 | 0.011 | 0.011 | 0.011 | 0.011 | 0.011 | 0.011 | 0.011 | 0.011 | 0.011 | 0.011 | 0.011 | 0.011 | 0.011 |
| | Polyoxyethylene stearyl ether phosphoric acid (lubricant) | (parts) | 0.075 | 0.075 | 0.075 | 0.075 | 0.075 | 0.075 | 0.075 | 0.075 | 0.075 | 0.075 | 0.075 | 0.075 | 0.075 | 0.075 | 0.075 | 0.075 | 0.075 | 0.075 | 0.075 |
| | Form of antioxidant added to polymer emulsion | | Added in the form of 50 wt% aqueous dispersion (*3) | | | | | | | | | | | | Added as it is | | | | | | — |
| Drying condition | Drying temperature | (°C) | 160 | 160 | 160 | 160 | 160 | 160 | 160 | 160 | 160 | 160 | 160 | 160 | 160 | 160 | 160 | 160 | 160 | 160 | 60 |
| | Drying time | (min) | 10 | 10 | 10 | 10 | 10 | 10 | 10 | 10 | 10 | 10 | 10 | 10 | 10 | 10 | 10 | 10 | 10 | 10 | 720 |
| Amount of residual antioxidant in acrylic rubber | Amount of residual stearyl 3-(3,5-di-tert-butyl-4-hydroxyphenyl)propionate | (wt%) | 0.16 | 0.49 | 0.99 | | | | | 0.03 | | | | | 0.84 | 0.80 | | | | | |
| | Amount of residual 2,4-bis[(octylthio)methyl]-6-methylphenol | (wt%) | | | | 0.97 | | | | | 0.05 | | | | | | 0.81 | | | | |
| | Amount of residual 2-mercaptobenzimidazole | (wt%) | | | | | 0.97 | | | | | 0.02 | | | | | | 0.76 | | | |
| | Amount of residual 4,4'-bis(α,α-dimethylbenzyl)diphenylamine | (wt%) | | | | | | 1.00 | | | | | 0.03 | | | | | | 0.81 | | |
| | Amount of residual mono-(di-, or tri-)(α-methylbenzyl)phenol | (wt%) | | | | | | | 0.95 | | | | | 0.01 | | | | | | 0.76 | |
| Mooney viscosity of acrylic rubber | Polymer Mooney (ML1+4) | | 33 | 33 | 33 | 33 | 32 | 33 | 33 | 28 | 27 | 29 | 27 | 28 | 27 | 30 | 29 | 28 | 28 | 29 | 27 |

(*1) The amount of the compounding agent added for preparation of the monomer emulsion is represented as a compounding amount relative to 100 parts of the charged monomers.

(*2) The amount of the compounding agent added to the polymer emulsion before coagulation is represented as a compounding amount relative to 100 parts of the polymer emulsion.

(*3) The 50 wt% aqueous dispersion was prepared by combining and mixing 50 parts of the antioxidant with 50 parts of the 0.2 wt% aqueous solution of sodium lauryl sulfate (trade name "Emal 2FG", made by Kao Corporation).

[Table 2]

Table 2

| | | | Example | | | | | | | Comparative Example | | | | | | | | | | | |
|---|---|---|---|---|---|---|---|---|---|---|---|---|---|---|---|---|---|---|---|---|---|
| Category | Description | Unit | 1 | 2 | 3 | 4 | 5 | 6 | 7 | 1 | 2 | 3 | 4 | 5 | 6 | 7 | 8 | 9 | 10 | 11 | 12 |
| Types of Acrylic rubber used | | | (A1) | (A2) | (A3) | (A4) | (A5) | (A6) | (A7) | (A8) | (A9) | (A10) | (A11) | (A12) | (A13) | (A14) | (A15) | (A16) | (A17) | (A18) | (A19) |
| Polymer emulsion after emulsion polymerization | Amount of aggregates in polymer emulsion after emulsion polymerization | (wt%) | 0 | 0 | 0 | 0 | 0 | 0 | 0 | 0 | 0 | 0 | 0 | 0 | 0 | 0.4 | 0.5 | 0.4 | 0.3 | 0.4 | 0 |
| Method of adding antioxidant | Method of adding antioxidant | | Added to polymer emulsion in the form of aqueous dispersion | | | | | | | Added to polymer emulsion as it is | | | | | | Added to emulsion monomer | | | | | Not added |
| Amount of residual antioxidant in acrylic rubber | Amount of residual stearyl 3-(3,5-di-tert-butyl-4-hydroxyphenyl)propionate | (wt%) | 0.16 | 0.49 | 0.99 | | | | | 0.03 | | | | | 0.84 | 0.80 | | | | | |
| | Amount of residual 2,4-bis[(octylthio)methyl]-6-methylphenol | (wt%) | | | | 0.97 | | | | | 0.05 | | | | | | 0.81 | | | | |
| | Amount of residual 2-mercaptobenzimidazole | (wt%) | | | | | 0.97 | | | | | 0.02 | | | | | | 0.78 | | | |
| | Amount of residual 4,4'-bis(α,α-dimethylbenzyl)diphenylamine | (wt%) | | | | | | 1.00 | | | | | 0.33 | | | | | | 0.81 | | |
| | Amount of residual mono- (di-, or tri-)(α-methylbenzyl)phenol | (wt%) | | | | | | | 0.95 | | | | | 0.01 | | | | | | 0.76 | |
| Ash content in acrylic rubber | Ash content in acrylic rubber | (wt%) | 0.23 | 0.22 | 0.18 | 0.31 | 0.26 | 0.31 | 0.33 | 0.57 | 0.62 | 0.58 | 0.64 | 0.68 | 0.65 | 0.33 | 0.26 | 0.28 | 0.25 | 0.29 | 0.65 |
| Mooney viscosity of acrylic rubber | Polymer Mooney (ML1+4) | | 33 | 33 | 33 | 33 | 32 | 33 | 33 | 28 | 27 | 29 | 27 | 28 | 27 | 30 | 29 | 28 | 28 | 29 | 27 |
| Evaluation of cross-linked rubber | Tensile strength (before thermal aging) | (MPa) | 10.3 | 10.3 | 10.3 | 10 | 10.2 | 9.8 | 10.3 | 8.5 | 8.7 | 8.6 | 8.8 | 9 | 8.9 | 9.8 | 9.7 | 9.6 | 9.8 | 9.9 | 8.6 |
| | Tensile strength (after thermal aging) | (MPa) | 8.9 | 8.9 | 8.9 | 8.8 | 9 | 8.7 | 9 | 7.9 | 7.8 | 8 | 7.7 | 8 | 7.3 | 8.9 | 8.8 | 9 | 8.7 | 9 | 7.7 |
| | Elongation (before thermal aging) | (%) | 200 | 200 | 200 | 200 | 200 | 220 | 200 | 200 | 200 | 200 | 220 | 200 | 210 | 200 | 200 | 200 | 220 | 200 | 200 |
| | Elongation (after thermal aging) | (%) | 160 | 160 | 160 | 160 | 160 | 170 | 160 | 160 | 160 | 160 | 170 | 160 | 150 | 160 | 160 | 160 | 170 | 160 | 160 |
| | Elongation change ratio | (%) | −20 | −20 | −20 | −20 | −20 | −22.73 | −20 | −20 | −20 | −20 | −22.73 | −20 | −29 | −20 | −20 | −20 | −23 | −20 | −20 |
| | Volume change ratio after immersion in water (water resistance) | (%) | 3.6 | 4.2 | 3.7 | 5.8 | 4.8 | 5.4 | 5.5 | 10.0 | 10.2 | 10.4 | 11.1 | 12.1 | 12.4 | 4.4 | 4.7 | 5.8 | 5.1 | 4.9 | 12.6 |

Tables 1 and 2 show that aggregates were not generated in the resulting polymer emulsions in Production Examples 1 to 7 in which the antioxidants in the form of a solution or a dispersion were added to the polymer emulsions after the emulsion polymerization and before the coagulation. For this reason, fouling inside the polymerization reaction tank attributed to such aggregates was not generated, and a reduction in Mooney viscosity caused by drying also was not observed. Moreover, the cross-linked rubbers prepared using the acrylic rubbers prepared in Production Examples 1 to 7 had high heat resistance and high tensile strength (Production Examples 1 to 7 and Examples 1 to 7).

In Production Examples 8 to 13 in which the antioxidants were added as they were, rather than in the form of a solution, to the polymer emulsions after the emulsion polymerization and before the coagulation, the Mooney viscosity was reduced by drying, and the cross-linked rubbers prepared using the acrylic rubbers prepared in Production Examples 8 to 13 had inferior tensile strength (Production Examples 8 to 13 and Comparative Examples 1 to 6).

In Production Examples 14 to 18 in which the antioxidants were added to the monomer emulsions before the emulsion polymerization, aggregates were generated in the resulting polymer emulsions, generating fouling inside the polymerization reaction tank caused by adhesion of aggregates (Production Examples 14 to 18 and Comparative Examples 7 to 11).

Furthermore, in Production Example 19 in which no antioxidant was added in the process of producing acrylic rubber, the Mooney viscosity was reduced by drying, and the cross-linked rubber prepared using the acrylic rubber prepared in Production Example 19 had inferior tensile strength (Production Example 19 and Comparative Example 12) .

## Claims

1. A method for producing an acrylic rubber, comprising:

   an emulsion polymerization step of emulsion polymerizing monomers for forming an acrylic rubber to prepare a polymer emulsion;
   an antioxidant addition step of adding an antioxidant in the form of a solution or a dispersion to the polymer emulsion; and
   a coagulation step of adding a coagulant to the polymer emulsion containing the antioxidant to yield hydrous crumbs.

2. The method for producing an acrylic rubber according to claim 1, wherein the content of the antioxidant in the acrylic rubber is 500 wt ppm or more.

3. The method for producing an acrylic rubber according to claim 2, wherein the content of the antioxidant in the acrylic rubber is 12,000 wt ppm or less.

4. The method for producing an acrylic rubber according to any one of claims 1 to 3, wherein the acrylic rubber comprises 95 wt% or more of acrylic rubber component.

5. The method for producing an acrylic rubber according to any one of claims 1 to 4, wherein the amount of the antioxidant to be added in the antioxidant addition step is 0.1 to 2 parts by weight relative to 100 parts by weight of the acrylic rubber component contained in the polymer emulsion.

6. The method for producing an acrylic rubber according to claim 5, wherein the amount of the antioxidant to be added in the antioxidant addition step is 0.2 to 1.2 parts by weight relative to 100 parts by weight of the acrylic rubber component contained in the polymer emulsion.

7. The method for producing an acrylic rubber according to any one of claims 1 to 6, wherein the antioxidant is at least one selected from the group consisting of sulfur atom-free phenol antioxidants, thiophenol antioxidants, amine antioxidants, and imidazole antioxidants.

8. The method for producing an acrylic rubber according to claim 7, wherein the antioxidant is at least one selected from the group consisting of stearyl 3-(3,5-di-tert-butyl-4-hydroxyphenyl)propionate, 2,4-bis[(octylthio)methyl]-6-methylphenol, 4,4'-bis($\alpha,\alpha$-dimethylbenzyl)diphenylamine, 2-mercaptobenzimidazole, and mono- (di-, or tri-) (a-methylbenzyl)phenol.

9. The method for producing an acrylic rubber according to claim 8, wherein the antioxidant is stearyl 3-(3,5-di-tert-butyl-4-hydroxyphenyl)propionate.

10. The method for producing an acrylic rubber according to any one of claims 1 to 9, wherein the antioxidant is added in the form of an aqueous solution or an aqueous dispersion.

11. The method for producing an acrylic rubber according to any one of claims 1 to 10, wherein when the antioxidant is added in the form of a solution or a dispersion, the proportion of the antioxidant contained in the solution or the dispersion is 10 to 90 wt%.

12. The method for producing an acrylic rubber according to claim 11, wherein when the antioxidant is added in the form of a solution or a dispersion, the proportion of the antioxidant contained in the solution or the dispersion is 20 to 60 wt%.

13. The method for producing an acrylic rubber according to any one of claims 1 to 12, further comprising a drying step of drying the hydrous crumbs at a temperature of 150°C or more in a screw extruder dryer or a hot air dryer.

14. The method for producing an acrylic rubber according to any one of claims 1 to 13, wherein the monomers are emulsion polymerized in the presence of a nonionic emulsifier and an anionic emulsifier.

15. The method for producing an acrylic rubber according to claim 14, wherein the amount of the nonionic emulsifier to the anionic emulsifier to be used is 50/50 to 75/25 in a weight ratio of "nonionic emulsifier/anionic emulsifier".

16. The method for producing an acrylic rubber according to any one of claims 1 to 15, wherein in the emulsion polymerization step, the emulsion polymerization reaction is performed while the monomers for forming an acrylic rubber, a polymerization initiator, and a reducing agent are being continuously added dropwise to a polymerization reaction system from the start of the polymerization reaction to any point of time.

17. The method for producing an acrylic rubber according to claim 16, wherein the emulsion polymerization reaction is performed while a monomer emulsion containing the monomers for forming an acrylic rubber mixed with an emulsifier and water is being continuously added dropwise to the polymerization reaction system from the start of the polymerization reaction to any point of time.

18. A method for producing an acrylic rubber composition, comprising the step of compounding a cross-linking agent to the acrylic rubber prepared by the production method according to any one of claims 1 to 17.

19. A method for producing a cross-linked rubber, comprising the step of cross-linking the acrylic rubber composition prepared by the production method according to claim 18.

**Patentansprüche**

1. Verfahren zur Herstellung eines Acrylkautschuks, umfassend:

einen Emulsionspolymerisations-Schritt des Emulsionspolymerisierens von Monomeren zur Bildung eines Acrylkautschuks, um eine Polymeremulsion herzustellen;

einen Antioxidationsmittelzugabe-Schritt des Zugebens eines Antioxidationsmittels in Form einer Lösung oder einer Dispersion zu der Polymeremulsion; und

einen Koagulationsschritt des Zugebens eines Koagulationsmittels zu der Polymeremulsion, die das Antioxidationsmittel enthält, um wasserhaltige Krümel zu erhalten.

2. Verfahren zur Herstellung eines Acrylkautschuks nach Anspruch 1, wobei der Gehalt des Antioxidationsmittels in dem Acrylkautschuk 500 Gew.-ppm oder mehr beträgt.

3. Verfahren zur Herstellung eines Acrylkautschuks nach Anspruch 2, wobei der Gehalt des Antioxidationsmittels in dem Acrylkautschuk 12.000 Gew.-ppm oder weniger beträgt.

4. Verfahren zur Herstellung eines Acrylkautschuks nach irgendeinem der Ansprüche 1 bis 3, wobei der Acrylkautschuk 95 Gew.-% oder mehr der Acrylkautschukkomponente umfasst.

5. Verfahren zur Herstellung eines Acrylkautschuks nach irgendeinem der Ansprüche 1 bis 4, wobei die Menge des Antioxidationsmittels, das in dem Antioxidationsmittelzugabe-Schritt zugegeben wird, 0,1 bis 2 Gewichtsteile beträgt, bezogen auf 100 Gewichtsteile der in der Polymeremulsion enthaltenen Acrylkautschukkomponente.

6. Verfahren zur Herstellung eines Acrylkautschuks nach Anspruch 5, wobei die Menge des Antioxidationsmittels, das in dem Antioxidationsmittelzugabe-Schritt zugegeben wird, 0,2 bis 1,2 Gewichtsteile beträgt, bezogen auf 100 Gewichtsteile der in der Polymeremulsion enthaltenen Acrylkautschukkomponente.

7. Verfahren zur Herstellung eines Acrylkautschuks nach irgendeinem der Ansprüche 1 bis 6, wobei das Antioxidationsmittel mindestens eines ist, das aus der Gruppe ausgewählt ist, die aus schwefelatomfreien Phenolantioxidationsmittel, Thiophenolantioxidationsmittel, Aminantioxidationsmittel und Imidazolantioxidationsmittel besteht.

8. Verfahren zur Herstellung eines Acrylkautschuks nach Anspruch 7, wobei das Antioxidationsmittel mindestens eines ist, das aus der Gruppe ausgewählt ist, die aus Stearyl-3-(3,5-di-tert-butyl-4-hydroxyphenyl)propionat, 2,4-Bis[(octylthio)methyl]-6-methylphenol, 4,4'-Bis($\alpha,\alpha$-dimethylbenzyl)diphenylamin, 2-Mercaptobenzimidazol und Mono-(Di- oder Tri-) ($\alpha$-methylbenzyl)phenol besteht.

9. Verfahren zur Herstellung eines Acrylkautschuks nach Anspruch 8, wobei das Antioxidationsmittel Stearyl-3-(3,5-di-tert-butyl-4-hydroxyphenyl)propionat ist.

10. Verfahren zur Herstellung eines Acrylkautschuks nach irgendeinem der Ansprüche 1 bis 9, wobei das Antioxidationsmittel in Form einer wässrigen Lösung oder einer wässrigen Dispersion zugegeben wird.

11. Verfahren zur Herstellung eines Acrylkautschuks nach irgendeinem der Ansprüche 1 bis 10, wobei, wenn das Antioxidationsmittel in Form einer Lösung oder einer Dispersion zugegeben wird, der Anteil des in der Lösung oder der Dispersion enthaltenen Antioxidationsmittels 10 bis 90 Gew.-% beträgt.

12. Verfahren zur Herstellung eines Acrylkautschuks nach Anspruch 11, wobei, wenn das Antioxidationsmittel in Form einer Lösung oder einer Dispersion zugegeben wird, der Anteil des in der Lösung oder der Dispersion enthaltenen Antioxidationsmittels 20 bis 60 Gew.-% beträgt.

13. Verfahren zur Herstellung eines Acrylkautschuks nach irgendeinem der Ansprüche 1 bis 12, ferner umfassend einen Trocknungsschritt der Trocknung der wasserhaltigen Krümel bei einer Temperatur von 150°C oder mehr in einem Schneckenextruder-Trockner oder einem Heißlufttrockner.

14. Verfahren zur Herstellung eines Acrylkautschuks nach irgendeinem der Ansprüche 1 bis 13, wobei die Monomere in Gegenwart eines nichtionischen Emulgators und eines anionischen Emulgators emulsionspolymerisiert werden.

15. Verfahren zur Herstellung eines Acrylkautschuks nach Anspruch 14, wobei die Menge des nichtionischen Emulgators zu dem zu verwendenden anionischen Emulgator in einem Gewichtsverhältnis von "nichtionischer Emulgator/anionischer Emulgator" 50/50 bis 75/25 beträgt.

16. Verfahren zur Herstellung eines Acrylkautschuks nach irgendeinem der Ansprüche 1 bis 15, wobei in dem Emulsionspolymerisations-Schritt die Emulsionspolymerisations-Reaktion durchgeführt wird, während die Monomere zur Bildung eines Acrylkautschuks, ein Polymerisationsinitiator und ein Reduktionsmittel kontinuierlich tropfenweise einem Polymerisations-Reaktionssystem vom Beginn der Polymerisationsreaktion bis zu einem beliebigen Zeitpunkt zugegeben werden.

17. Verfahren zur Herstellung eines Acrylkautschuks nach Anspruch 16, wobei die Emulsionspolymerisations-Reaktion durchgeführt wird, während eine Monomeremulsion, die die Monomere zur Bildung eines Acrylkautschuks gemischt mit einem Emulgator und Wasser enthält, kontinuierlich tropfenweise dem Polymerisations-Reaktionssystem vom Beginn der Polymerisationsreaktion bis zu einem beliebigen Zeitpunkt zugegeben wird.

18. Verfahren zur Herstellung einer Acrylkautschukzusammensetzung, umfassend den Schritt des Beimischens eines Vernetzungsmittels zu dem Acrylkautschuk, der durch das Herstellungsverfahren nach irgendeinem der Ansprüche 1 bis 17 hergestellt wurde.

19. Verfahren zur Herstellung eines vernetzten Kautschuks, umfassend den Schritt des Vernetzens der Acrylkautschukzusammensetzung, die durch das Herstellungsverfahren nach Anspruch 18 hergestellt wurde.


## Revendications

1. Procédé de production d'un caoutchouc acrylique, comprenant :

   une étape de polymérisation en émulsion consistant à polymériser en émulsion des monomères pour former un caoutchouc acrylique pour préparer une émulsion de polymère ;
   une étape d'ajout d'antioxydant consistant à ajouter un antioxydant sous la forme d'une solution ou d'une dispersion à l'émulsion de polymère ; et
   une étape de coagulation consistant à ajouter un coagulant à l'émulsion de polymère contenant l'antioxydant pour obtenir des granulés hydratés.

2. Procédé de production d'un caoutchouc acrylique selon la revendication 1, dans lequel la teneur de l'antioxydant dans le caoutchouc acrylique est de 500 ppm en poids ou plus.

3. Procédé de production d'un caoutchouc acrylique selon la revendication 2, dans lequel la teneur de l'antioxydant dans le caoutchouc acrylique est de 12 000 ppm en poids ou moins.

4. Procédé de production d'un caoutchouc acrylique selon l'une quelconque des revendications 1 à 3, dans lequel le caoutchouc acrylique comprend 95 % en poids ou plus de composant de caoutchouc acrylique.

5. Procédé de production d'un caoutchouc acrylique selon l'une quelconque des revendications 1 à 4, dans lequel la quantité de l'antioxydant à ajouter dans l'étape d'ajout d'antioxydant est de 0,1 à 2 parties en poids par rapport à 100 parties en poids du composant de caoutchouc acrylique contenu dans l'émulsion de polymère.

6. Procédé de production d'un caoutchouc acrylique selon la revendication 5, dans lequel la quantité de l'antioxydant à ajouter dans l'étape d'ajout d'antioxydant est de 0,2 à 1,2 partie en poids par rapport à 100 parties en poids du composant de caoutchouc acrylique contenu dans l'émulsion de polymère.

7. Procédé de production d'un caoutchouc acrylique selon l'une quelconque des revendications 1 à 6, dans lequel l'antioxydant est au moins un antioxydant choisi dans le groupe constitué des antioxydants de phénol sans atome de soufre, des antioxydants de thiophénol, des antioxydants d'aminé et des antioxydants d'imidazole.

8. Procédé de production d'un caoutchouc acrylique selon la revendication 7, dans lequel l'antioxydant est au moins un antioxydant choisi dans le groupe constitué du 3-(3,5-di-tert-butyl-4-hydroxyphényl)propionate de stéaryle, du 2,4-bis[(octylthio)méthyl]-6-méthylphénol, de la 4,4'-bis($\alpha,\alpha$-diméthylbenzyl)diphénylamine, du 2-mercaptobenzimidazole et du mono- (di-, ou tri-)($\alpha$-méthylbenzyl) phénol.

9. Procédé de production d'un caoutchouc acrylique selon la revendication 8, dans lequel l'antioxydant est du 3-(3,5-di-tert-butyl-4-hydroxyphényl)propionate de stéaryle.

**10.** Procédé de production d'un caoutchouc acrylique selon l'une quelconque des revendications 1 à 9, dans lequel l'antioxydant est ajouté sous la forme d'une solution aqueuse ou d'une dispersion aqueuse.

**11.** Procédé de production d'un caoutchouc acrylique selon l'une quelconque des revendications 1 à 10, dans lequel lorsque l'antioxydant est ajouté sous la forme d'une solution ou d'une dispersion, la proportion de l'antioxydant contenu dans la solution ou la dispersion est de 10 à 90 % en poids.

**12.** Procédé de production d'un caoutchouc acrylique selon la revendication 11, dans lequel lorsque l'antioxydant est ajouté sous la forme d'une solution ou d'une dispersion, la proportion de l'antioxydant contenu dans la solution ou la dispersion est de 20 à 60 % en poids.

**13.** Procédé de production d'un caoutchouc acrylique selon l'une quelconque des revendications 1 à 12, comprenant en outre une étape de séchage consistant à sécher les granulés hydratés à une température de 150 °C ou plus dans un séchoir d'extrudeuse à vis ou un séchoir à air chaud.

**14.** Procédé de production d'un caoutchouc acrylique selon l'une quelconque des revendications 1 à 13, dans lequel les monomères sont polymérisés en émulsion en présence d'un émulsifiant non ionique et d'un émulsifiant anionique.

**15.** Procédé de production d'un caoutchouc acrylique selon la revendication 14, dans lequel la quantité de l'émulsifiant non ionique par rapport à l'émulsifiant anionique à utiliser est de 50/50 à 75/25 en un rapport pondéral de « émulsifiant non ionique/émulsifiant anionique ».

**16.** Procédé de production d'un caoutchouc acrylique selon l'une quelconque des revendications 1 à 15, dans lequel dans l'étape de polymérisation en émulsion, la réaction de polymérisation en émulsion est effectuée tandis que les monomères pour former un caoutchouc acrylique, un initiateur de polymérisation et un agent réducteur sont ajoutés en continu goutte à goutte à un système de réaction de polymérisation à partir du début de la réaction de polymérisation jusqu'à un moment quelconque.

**17.** Procédé de production d'un caoutchouc acrylique selon la revendication 16, dans lequel la réaction de polymérisation en émulsion est effectuée tandis qu'une émulsion de monomère contenant les monomères pour former un caoutchouc acrylique mélangé avec un émulsifiant et de l'eau est ajoutée en continu goutte à goutte au système de réaction de polymérisation à partir du début de la réaction de polymérisation jusqu'à un moment quelconque.

**18.** Procédé de production d'une composition de caoutchouc acrylique, comprenant l'étape consistant à mélanger un agent de réticulation au caoutchouc acrylique préparé par le procédé de production selon l'une quelconque des revendications 1 à 17.

**19.** Procédé de production d'un caoutchouc réticulé, comprenant l'étape consistant à réticuler la composition de caoutchouc acrylique préparée par le procédé de production selon la revendication 18.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H07145291 A